(19) Europäisches Patentamt
European Patent Office
Office européen des brevets

(11) EP 4 573 905 A1

(12) EUROPEAN PATENT APPLICATION

(43) Date of publication:
**25.06.2025 Bulletin 2025/26**

(21) Application number: **25157147.7**

(22) Date of filing: **13.04.2021**

(51) International Patent Classification (IPC):
***A01N 43/40*** *(2006.01)* ***A01N 47/14*** *(2006.01)*
***A01P 3/00*** *(2006.01)* ***A01N 45/02*** *(2006.01)*
***A01N 43/56*** *(2006.01)* ***A01N 43/54*** *(2006.01)*
***A01N 47/24*** *(2006.01)* ***A01N 37/50*** *(2006.01)*
***A01N 43/653*** *(2006.01)* ***A01N 43/84*** *(2006.01)*
***A01N 37/34*** *(2006.01)* ***A01N 59/16*** *(2006.01)*
***A01N 59/20*** *(2006.01)*

(52) Cooperative Patent Classification (CPC):
(C-Sets available)
**A01N 43/40; A01N 47/14; A01P 3/00** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020 US 202063025923 P**

(62) Document number(s) of the earlier application(s) in accordance with Art. 76 EPC:
**21727958.7 / 4 149 261**

(71) Applicant: **Corteva Agriscience LLC**
**Indianapolis, IN 46268 (US)**

(72) Inventors:
- **Avila-Adame, Cruz**
**Indianapolis, 46288 (US)**
- **Meyer, Kevin**
**Indianapolis, 46288 (US)**
- **Slanec, Tom**
**Indianapolis, 46268 (US)**
- **Yao, Chenglin**
**Indianapolis, 46288 (US)**

(74) Representative: **f & e patent**
**Braunsberger Feld 29**
**51429 Bergisch Gladbach (DE)**

Remarks:
This application was filed on 11-02-2025 as a divisional application to the application mentioned under INID code 62.

# (54) SYNERGISTIC FUNGICIDAL INTERACTIONS OF A PICOLINAMIDE FUNGICIDE WITH OTHER FUNGICIDES AGAINST ASIAN SOYBEAN RUST

(57) The present technology relates to synergistic fungicidal mixtures comprising a fungicidally effective amount of a compound of Formula I and one or two additional fungicides selected from the group consisting of: a MET III Qi inhibitor, a succinate dehydrogenase inhibitors (SDHI), a MET III Qo inhibitor, a multi-site inhibitor (MSI), a sterol biosynthesis inhibitors (SBI) and any combinations thereof, and methods and uses thereof. Such mixtures provide synergistic control of Asian soybean rust.

EP 4 573 905 A1

(52) Cooperative Patent Classification (CPC): (Cont.)

C-Sets
**A01N 43/40, A01N 37/34, A01N 37/50,**
**A01N 43/40, A01N 43/54, A01N 43/56,**
**A01N 43/653, A01N 43/84, A01N 45/02,**
**A01N 47/14, A01N 47/24, A01N 59/16,**
**A01N 59/20;**
**A01N 47/14, A01N 59/16**

## Description

### 1. FIELD

This disclosure concerns a synergistic fungicidal mixture containing (a) a compound of Formula I and (b) one or two additional fungicides. Such mixtures and compositions thereof are useful and highly active against Asian soybean rust is caused by (*Phakopsora pachyrhizi,* PHAKPA).

### 2. BACKGROUND

Fungicides are compounds, of natural or synthetic origin, which act to protect plants against damage caused by fungi. Current methods of agriculture rely heavily on the use of fungicides. In fact, some crops cannot be grown usefully without the use of fungicides. Using fungicides allows a grower to increase the yield and the quality of the crop, and consequently, increase the value of the crop. In most situations, the increase in value of the crop is worth at least three times the cost of the use of the fungicide.

However, no one fungicide is useful in all situations and repeated usage of a single fungicide frequently leads to the development of resistance to that and related fungicides. Consequently, research is being conducted to produce fungicides and combinations of fungicides that are safer, that have better performance, that require lower dosages, that are easier to use, and that cost less.

Synergism occurs when the activity of two or more compounds exceeds the activities of the compounds when used alone.

### 3. SUMMARY

The present disclosure provides synergistic mixtures or compositions thereof comprising fungicidal compounds. It is a further object of this disclosure to provide methods or processes that use these synergistic compositions. The synergistic mixtures or compositions thereof are capable of preventing or curing, or both, Asian soybean rust is caused by (*Phakopsora pachyrhizi,* PHAKPA).

In addition, the synergistic mixtures or compositions have improved efficacy against the specific *Phakopsora pachyrhizi* pathogen in particular. In accordance with this disclosure, synergistic mixtures, compositions are provided along with methods their manufacture and methods for their use.

### 4. DETAILED DESCRIPTION

#### 4.1. Definitions

Various terms used in the specification and claims herein are defined as set forth below, unless otherwise specifically defined in this disclosure. All technical and scientific terms not defined herein have the meaning commonly understood by a person skilled in the art to which this disclosure belongs.

"Phytologically acceptable amount" refers to an amount of a compound that kills or inhibits the plant disease for which control is desired, but is not significantly toxic to the plant. This amount will generally be from about 0.1 to about 1000 ppm (parts per million), with 1 to 500 ppm being preferred. The exact concentration of compound required varies with the fungal disease to be controlled, the type of formulation employed, the method of application, the particular plant species, climate conditions, and the like. A suitable application rate is typically in the range from about 0.10 to about 4 pounds/acre (about 0.01 to 0.45 grams per square meter, g/m2).

As used herein, the term "salt" refers to salts which are suitable for use in agriculture, i.e. they affect humans and lower animals without undue toxicity, irritation, allergic response and the like, and are commensurate with a reasonable benefit/risk ratio in agriculture. These salts are well known in the art. Salts of the compounds described herein include those derived from suitable inorganic and organic acids and bases. Examples of acid addition salts are salts of an amino group formed with inorganic acids such as hydrochloric acid, hydrobromic acid, phosphoric acid, sulfuric acid and perchloric acid or with organic acids such as acetic acid, oxalic acid, maleic acid, tartaric acid, citric acid, succinic acid or malonic acid or by using other methods used in the art such as ion exchange. Other salts include, but are not limited to, adipate, alginate, ascorbate, aspartate, benzenesulfonate, benzoate, bisulfate, borate, butyrate, camphorate, camphorsulfonate, citrate, cyclopentanepropionate, digluconate, dodecyl sulfate, ethanesulfonate, formate, fumarate, glucoheptonate, glycerophosphate, gluconate, hemisulfate, heptanoate, hexanoate, hydroiodide, 2-hydroxy-ethanesulfonate, lactobionate, lactate, laurate, lauryl sulfate, malate, maleate, malonate, methanesulfonate, 2-naphthalenesulfonate, nicotinate, nitrate, oleate, oxalate, palmitate, pamoate, pectinate, persulfate, 3-phenylpropionate, phosphate, pivalate, propionate, stearate, succinate, sulfate, tartrate, thiocyanate, p-toluenesulfonate, undecanoate, valerate salts, and the

like. Salts derived from appropriate bases include alkali metal, alkaline earth metal, ammonium salts. Representative alkali or alkaline earth metal salts include sodium, lithium, potassium, calcium, magnesium, and the like. Further pharmaceutically acceptable salts include, when appropriate, nontoxic ammonium, quaternary ammonium, and amine cations formed using counterions such as halide, hydroxide, carboxylate, sulfate, phosphate, nitrate, loweralkyl sulfonate and aryl sulfonate.

### 4.2. Additional interpretational conventions

The compounds described herein may exist as solvates, especially hydrates, and unless otherwise specified, all such solvates and hydrates are intended. Hydrates may form during manufacture of the compounds or compositions comprising the compounds, or hydrates may form over time due to the hygroscopic nature of the compounds. Compounds of the present technology may exist as organic solvates as well, including DMF, ether, and alcohol solvates, among others. The identification and preparation of any particular solvate is within the skill of the ordinary artisan of synthetic organic or medicinal chemistry, and are readily attainable using the textbook and other general synthetic references disclosed herein.

Throughout this application, the text refers to various aspects of the present compounds, compositions, and methods. The various aspects described are meant to provide a variety of illustrative examples and should not be construed as descriptions of alternative species. Rather, it should be noted that the descriptions of various aspects provided herein may be of overlapping scope. The aspects discussed herein are merely illustrative and are not meant to limit the scope of the present technology.

For the purposes of this specification and appended claims, unless otherwise indicated, all numbers expressing amounts, sizes, dimensions, proportions, shapes, formulations, parameters, percentages, parameters, quantities, characteristics, and other numerical values used in the specification and claims, are to be understood as being modified in all instances by the term "about" even though the term "about" may not expressly appear with the value, amount or range. Accordingly, unless indicated to the contrary, the numerical parameters set forth in the following specification and attached claims are not and need not be exact, but may be approximate and/or larger or smaller as desired, reflecting tolerances, conversion factors, rounding off, measurement error and the like, and other factors known to those of skill in the art depending on the desired properties sought to be obtained by the presently disclosed subject matter. For example, the term "about," when referring to a value can be meant to encompass variations of, in some aspects, ± 100% in some aspects ± 50%, in some aspects ± 20%, in some aspects ± 10%, in some aspects ± 5%, in some aspects ±1%, in some aspects ± 0.5%, and in some aspects ± 0.1% from the specified amount, as such variations are appropriate to perform the disclosed methods or employ the disclosed compositions.

As used herein and in the appended claims, singular articles such as "a," "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, including the upper and lower bounds of the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the aspects and does not pose a limitation on the scope of the claims unless otherwise stated. No language in the specification should be construed as indicating any non-claimed element as essential.

### 4.3. Mixtures

#### 4.3.1. Components

In one aspect, the disclosure provides for a mixture containing a compound of Formula I:

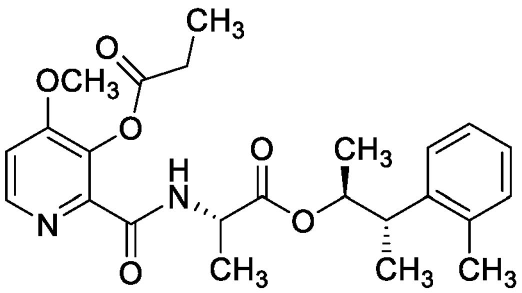

I

;

and one or two additional fungicides selected from the group consisting of: a MET III Qi inhibitor, a succinate dehydrogenase inhibitors (SDHI), a MET III Qo inhibitor, a multi-site inhibitor (MSI), a sterol biosynthesis inhibitors (SBI) and any combinations thereof.

In one aspect, the disclosure provides for a mixture containing a compound of Formula I and one additional fungicide.

In one aspect, the disclosure provides for a mixture containing a compound of Formula I and two additional fungicides.

In one aspect, the disclosure provides for a mixture containing a compound of Formula I and one or two additional fungicides wherein each additional fungicide is selected from the group consisting of: benzovindiflupyr, fluxapyroxad, bixafen, pydiflumetofen, picoxystrobin, azoxystrobin, pyraclostrobin, trifloxystrobin, metominostrobin, prothioconazole, epoxiconazole, tebuconazole, cyproconazole, difenoconazole, mefentrifluconazole, propiconazole, tetraconazole, fenpropimorph, chlorothalonil, mancozeb, Cu oxychloride and any combinations thereof.

In one aspect, the disclosure provides for a mixture containing a compound of Formula I and one additional fungicide which is picoxystrobin.

In one aspect, the disclosure provides for a mixture containing a compound of Formula I and one additional fungicide which is benzovindiflupyr.

In one aspect, the disclosure provides for a mixture containing a compound of Formula I and two additional fungicides wherein one additional fungicide is picoxystrobin.

In one aspect, the disclosure provides for a mixture containing a compound of Formula I and two additional fungicides wherein one additional fungicide is picoxystrobin and the other is a succinate dehydrogenase inhibitor (SDHI).

In one aspect, the disclosure provides for a mixture containing a compound of Formula I and two additional fungicides wherein one additional fungicide is picoxystrobin and the other is a sterol biosynthesis inhibitor (SBI).

In one aspect, the disclosure provides for a mixture containing a compound of Formula I and two additional fungicides wherein one additional fungicide is picoxystrobin and the other is a MET III Qi inhibitor.

In one aspect, the disclosure provides for a mixture containing a compound of Formula I and two additional fungicides wherein one additional fungicide is picoxystrobin and the other is a MET III Qo inhibitor.

In one aspect, the disclosure provides for a mixture containing a compound of Formula I and two additional fungicides wherein one additional fungicide is picoxystrobin and the other is a multi-site inhibitor (MSI).

In one aspect, the disclosure provides for a mixture containing a compound of Formula I and two additional fungicides wherein one additional fungicide is picoxystrobin and the other is benzovindiflupyr.

In one aspect, the disclosure provides for a mixture containing a compound of Formula I and two additional fungicides wherein one additional fungicide is picoxystrobin and the other is pyraclostrobin.

In one aspect, the disclosure provides for a mixture containing a compound of Formula I and two additional fungicides wherein one additional fungicide is picoxystrobin and the other is prothioconazole.

In one aspect, the disclosure provides for a mixture containing a compound of Formula I and two additional fungicides wherein one additional fungicide is picoxystrobin and the other is mancozeb.

In one aspect, the disclosure provides for a mixture containing a compound of Formula I and two additional fungicides wherein one additional fungicide is benzovindiflupyr.

The compositions of the present disclosure are preferably applied in the form of a formulation comprising a composition of (a) a compound of Formula I and (b) an additional fungicide selected from the group consisting of epoxiconazole, prothioconazole, picoxystrobin, azoxystrobin, pyraclostrobin, bixafen, mancozeb and chlorothalonil, together with a phytologically acceptable carrier.

The structure of Compound I, as well as its synthesis and fungicidal application via agricultural formulation or composition, is disclosed in patent application No. PCT/US2019/021263, which is herein incorporated in its entirety.

Compound I displayed some fungicidal activity in the reference above, though many broad-based fungicides fail to provide activity against Asian soybean rust caused by (*Phakopsora pachyrhizi,* PHAKPA) due to resistance which has built up.

Sterol biosynthesis inhibitors (SBIs) are a known class of fungicides in the art and include, but are not limited to, C14 demethylase inhibitors (DMI fungicides), for example prothioconazole, epoxiconazole, cyproconazole, myclobutanil, metconazole, difenoconazole, tebuconazole, tetraconazole, fenbuconazole, propiconazole, mefentrifluconazole, fluquinconazole, flusilazole, flutriafol and prochloraz, as well as Delta 14-reductase inhibitors, for example, fenpropimorph and aldimorph.

Succinate dehydrogenase inhibitors of complex II (SDHIs), are a known class of fungicides in the art and include, but are not limited to, fluxapyroxad, benzovindiflupyr, penthiopyrad, isopyrazam, bixafen, pydiflumetofen, boscalid, penflufen, and fluopyram.

Quinone outside inhibitors of complex III (MET III $Q_o$) are a known class of fungicides in the art and include, but are not limited to, pyraclostrobin, fluoxastrobin, azoxystrobin, trifloxystrobin, picoxystrobin, metominostrobin, and kresoxim methyl.

Multi-site Inhibitors are a known class of fungicides in the art and include, but are not limited to, thio- and dithiocarbamates, such as mancozeb, organochlorine compounds, such as chlorothalonil, inorganics such as Cu oxychloride.

Azoxystrobin is the common name for methyl (*aE*)-2-[[6-(2-cyanophenoxy)-4-pyrimidinyl]oxy]-a-(methoxymethylene)benzeneacetate.

Bixafen is the common name for N-(3',4'-dichloro-5-fluoro[1,1'-biphenyl]-2-yl)-3-(difluoromethyl)-1-methyl-1H pyrazole-4-carboxamide.

Chlorothalonil is the common name for tetrachlorisophthalonitrile.

Epoxiconazole is the common name for rel-1-[[(2R,3S)-3-(2-chlorophenyl)-2-(4-fluorophenyl)oxiranyl] methyl]-1*H*1,2,4-triazole.

Prothioconazole is the common name for 2-[2-(1-chlorocyclopropyl)-3-(2-chlorophenyl)-2-hydroxypropyl]- 1,2-dihydro-3H- 1,2,4-triazole-3-thione.

Pyraclostrobin is the common name for methyl [2-[[[1-(4-chlorophenyl)-1*H*-pyrazol-3-yl]oxy]methyl]phenyl] methoxycarbamate.

Benzovindiflupyr is the common name for N-[11-(dichloromethylidene)-3-tricyclo[6.2.1.0]undeca-2(7),3,5-trienyl]-3-(difluoromethyl)-1-methylpyrazole-4-carboxamide.

Fluxapyroxad is the common name for 3-(difluoromethyl)-1-methyl-N-[2-(3,4,5-trifluorophenyl)phenyl]pyrazole-4-carboxamide.

Pydiflumetofen is the common name for 3-(difluoromethyl)-N-methoxy-1-methyl-N-[1-(2,4,6-trichlorophenyl) propan-2-yl]pyrazole-4-carboxamide.

Picoxystrobin is the common name for methyl (E)-3-methoxy-2-[2-[[6-(trifluoromethyl)pyridin-2-yl]oxymethylphenyl]prop-2-enoate.

Trifloxystrobin is the common name for methyl (2E)-2-methoxyimino-2-[2-[[(E)-1-[3-(trifluoromethyl)phenyl] ethylideneamino]oxymethyl]phenyl]acetate.

Metominostrobin is the common name for (2E)-2-methoxyimino-N-methyl-2-(2-phenoxyphenyl)acetamide.

Tebuconazole is the common name for 1-(4-chlorophenyl)-4,4-dimethyl-3-(1,2,4-triazol-1 -ylmethyl)pentan-3-ol.

Cyproconazole is the common name for 2-(4-chlorophenyl)-3-cyclopropyl-1-(1,2,4-triazol-1-yl)butan-2-ol.

Difenoconazole is the common name for 1-[[2-[2-chloro-4-(4-chlorophenoxy)phenyl]-4-methyl-1,3-dioxolan-2-yl]methyl]-1,2,4-triazole.

Mefentrifluconazole is the common name for 2-[4-(4-chlorophenoxy)-2-(trifluoromethyl)phenyl]-1-(1,2,4-triazol-1-yl)propan-2-ol.

Propiconazole is the common name for 1-[[2-(2,4-dichlorophenyl)-4-propyl-1,3-dioxolan-2-yl]methyl]-1,2,4-triazole.

Tetraconazole is the common name for 1-[2-(2,4-dichlorophenyl)-3-(1,1,2,2-tetrafluoroethoxy)propyl]-1,2,4-triazole.

Fenpropimorph is the common name for (2S,6R)-4-[3-(4-tert-butylphenyl)-2-methylpropyl]-2,6-dimethylmorpholine.

Mancozeb is the common name for zinc manganese(2+) N-[2-(sulfidocarbothioylamino)ethyl]carbamodithioate.

Cu oxychloride is the common name for dicopper dichloride trihydroxide.

The fungicidal activity for: benzovindiflupyr, fluxapyroxad, bixafen, pydiflumetofen, picoxystrobin, azoxystrobin, pyraclostrobin, trifloxystrobin, metominostrobin, prothioconazole, epoxiconazole, tebuconazole, cyproconazole, difenoconazole, mefentrifluconazole, propiconazole, tetraconazole, fenpropimorph, chlorothalonil, mancozeb, and Cu oxychloride is described in The Pesticide Manual, Eighteenth Edition, 2018 while each one of these compounds can be obtained commercially thru vendors such as Sigma Aldrich, TCI Chemical and the like, but if not, these compound can be

synthesized according to the references mentioned herein which detail general synthetic procedures to get to the final compound.

### 4.3.2. Fungicidal Compositions

In some aspects, the disclosure provides for fungicidal mixtures and/or compositions or methods using a fungicidal mixture or composition to control or to prevent fungal attack. Concentrated formulations may be dispersed in water, or other liquids, for application, or formulations may be dust-like or granular, which may then be applied without further treatment. The formulations can be prepared according to procedures that are known and conventional in the agricultural chemical art. Methods to make and use agricultural compositions comprising the compound of Formula I and one or two additional fungicides can be found in, for example, references such as, Hance et al. Weed Control Handbook (8th Ed., Blackwell Scientific, Oxford, 1989) and Mollet, H. and Grubemann, A.: Formulation technology (Wiley VCH Verlag, Weinheim, 2001, Perry's Chemical Engineer's Handbook, 4th Ed., McGraw-Hill, New York, 1963, Browning, et al. "Agglomeration" in Chemical Engineering, Dec. 4, 1967, 147- 48, Klingman, Weed Control as a Science (J. Wiley & Sons, New York, 1961) and US 3,060,084, US 3,299,566, US 4,172,714, US 4,144,050, US 3,920,442, US 5,180,587, US 5,232,701, US 5,208,030, EP 707 445, GB 2,095,558, and WO9113546, each of which is incorporated by reference in its entirety.

The present disclosure contemplates all vehicles by which one or more of the compounds may be formulated for delivery and used as a fungicide. Typically, formulations are applied to plant foliage or to the root system, or the surrounding soil, or even to a seed, as aqueous suspensions or emulsions. Such suspensions or emulsions may be produced from water-soluble, water-suspendible, or emulsifiable formulations which are solids, usually known as wettable powders; or liquids, usually known as emulsifiable concentrates, aqueous suspensions, or suspension concentrates. As will be readily appreciated, any material to which these compounds may be added may be used, provided it yields the desired utility without significant interference with the activity of these compounds as antifungal agents.

Concentrated formulations can be dispersed in water, or another liquid, for application, or formulations can be dust-like or granular, which can then be applied without further treatment. The formulations are prepared according to procedures which are conventional in the agricultural chemical art, but which are novel and important because of the presence therein of a synergistic mixture or composition.

The formulations that are applied most often are aqueous suspensions or emulsions. Either such water-soluble, water-suspendable, or emulsifiable formulations are solids, usually known as wettable powders, or liquids, usually known as emulsifiable concentrates, aqueous suspensions, or suspension concentrates. The present disclosure contemplates all vehicles by which the synergistic compositions can be formulated for delivery and use as a fungicide.

As will be readily appreciated, any material to which these synergistic mixtures or compositions can be added may be used, provided they yield the desired utility without significant interference with the activity of these synergistic compositions as antifungal agents.

Wettable powders, which may be compacted to form water-dispersible granules, comprise an intimate mixture of the synergistic composition, a carrier and agriculturally acceptable surfactants. The concentration of the synergistic composition in the wettable powder is usually from about 10% to about 90% by weight, more preferably about 25% to about 75% by weight, based on the total weight of the formulation. In the preparation of wettable powder formulations, the synergistic composition can be compounded with any of the finely divided solids, such as prophyllite, talc, chalk, gypsum, Fuller's earth, bentonite, attapulgite, starch, casein, gluten, montmorillonite clays, diatomaceous earths, purified silicates or the like. In such operations, the finely divided carrier is ground or mixed with the synergistic composition in a volatile organic solvent. Effective surfactants, comprising from about 0.5% to about 10% by weight of the wettable powder, include sulfonated lignins, naphthalenesulfonates, alkylbenzenesulfonates, alkyl sulfates, and non-ionic surfactants, such as ethylene oxide adducts of alkyl phenols.

Emulsifiable concentrates of the synergistic mixture or composition comprise a convenient concentration, such as from about 10% to about 50% by weight, in a suitable liquid, based on the total weight of the emulsifiable concentrate formulation. The components of the synergistic compositions, jointly or separately, are dissolved in a carrier, which is either a water-miscible solvent or a mixture of water-immiscible organic solvents, and emulsifiers. The concentrates may be diluted with water and oil to form spray mixtures in the form of oil-in-water emulsions. Useful organic solvents include aromatics, especially the high-boiling naphthalenic and olefinic portions of petroleum such as heavy aromatic naphtha. Other organic solvents may also be used, such as, for example, terpenic solvents, including rosin derivatives, aliphatic ketones, such as cyclohexanone, and complex alcohols, such as 2-ethoxyethanol.

Emulsifiers which can be advantageously employed herein can be readily determined by those skilled in the art and include various nonionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (*e.g.*, calcium) of alkylaryl sulfonic acids, oil-soluble salts or sulfated polyglycol ethers and appropriate salts of phosphated polyglycol ether.

Representative organic liquids which can be employed in preparing the emulsifiable concentrates of the present disclosure are the aromatic liquids such as xylene, propyl benzene fractions, or mixed naphthalene fractions, mineral oils, substituted aromatic organic liquids such as dioctyl phthalate, kerosene, dialkyl amides of various fatty acids, particularly the dimethyl amides of fatty glycols and glycol derivatives such as the *n*-butyl ether, ethyl ether or methyl ether of diethylene glycol, and the methyl ether of triethylene glycol. Mixtures of two or more organic liquids are also often suitably employed in the preparation of the emulsifiable concentrate. The preferred organic liquids are xylene, and propyl benzene fractions, with xylene being most preferred. The surface-active dispersing agents are usually employed in liquid formulations and in the amount of from 0.1 to 20 percent by weight of the combined weight of the dispersing agent with the synergistic compositions. The formulations can also contain other compatible additives, for example, plant growth regulators and other biologically active compounds used in agriculture.

Aqueous suspensions comprise suspensions of one or more water-insoluble compounds, dispersed in an aqueous vehicle at a concentration in the range from about 5% to about 70% by weight, based on the total weight of the aqueous suspension formulation. Suspensions are prepared by finely grinding the components of the synergistic combination either together or separately, and vigorously mixing the ground material into a vehicle comprised of water and surfactants chosen from the same types discussed above. Other ingredients, such as inorganic salts and synthetic or natural gums, may also be added to increase the density and viscosity of the aqueous vehicle. It is often most effective to grind and mix at the same time by preparing the aqueous mixture and homogenizing it in an implement such as a sand mill, ball mill, or piston-type homogenizer.

The synergistic composition may also be applied as a granular formulation, which is particularly useful for applications to the soil. Granular formulations usually contain from about 0.5% to about 10% by weight of the compounds, based on the total weight of the granular formulation, dispersed in a carrier which consists entirely or in large part of coarsely divided attapulgite, bentonite, diatomite, clay or a similar inexpensive substance. Such formulations are usually prepared by dissolving the synergistic composition in a suitable solvent and applying it to a granular carrier which has been pre-formed to the appropriate particle size, in the range of from about 0.5 to about 3 mm. Such formulations may also be prepared by making a dough or paste of the carrier and the synergistic composition, and crushing and drying to obtain the desired granular particle.

Dusts containing the synergistic composition are prepared simply by intimately mixing the synergistic composition in powdered form with a suitable dusty agricultural carrier, such as, for example, kaolin clay, ground volcanic rock, and the like. Dusts can suitably contain from about 1% to about 10% by weight of the synergistic composition/carrier combination.

The formulations may contain agriculturally acceptable adjuvant surfactants to enhance deposition, wetting and penetration of the synergistic composition onto the target crop and organism. These adjuvant surfactants may optionally be employed as a component of the formulation or as a tank mix. The amount of adjuvant surfactant will vary from 0.01 percent to 1.0 percent volume/volume (v/v) based on a spray-volume of water, preferably 0.05 to 0.5 percent. Suitable adjuvant surfactants include ethoxylated nonyl phenols, ethoxylated synthetic or natural alcohols, salts of the esters or sulfosuccinic acids, ethoxylated organosilicones, ethoxylated fatty amines and blends of surfactants with mineral or vegetable oils.

Wettable powders, which may be compacted to form water-dispersible granules, comprise an intimate mixture of one or two of the additional fungicide and the compound of Formula I, an inert carrier and/or surfactants. The concentration of the compound in the wettable powder may be from about 1 percent to about 100 percent, from about 5 percent to about 95 percent, from about 10 percent to about 90 percent by weight, from about 20 percent to about 90 percent, based on the total weight of the wettable powder, more preferably about 25 weight percent to about 75 weight percent. In the preparation of wettable powder formulations, the compounds may be compounded with any finely divided solid, such as prophyllite, talc, chalk, gypsum, Fuller's earth, bentonite, attapulgite, starch, casein, gluten, montmorillonite clays, diatomaceous earths, purified silicates or the like. In such operations, the finely divided carrier and surfactants are typically blended with the compound(s) and milled.

Emulsifiable concentrates of the mixture of one or two of the additional fungicide and the compound of Formula I may comprise a convenient concentration, such as from about 1 weight percent to about 50 weight percent of the compound, in a suitable liquid, based on the total weight of the concentrate. The compounds may be dissolved in an inert carrier, which is either a water-miscible solvent or a mixture of water-immiscible organic solvents, and emulsifiers. The concentrates may be diluted with water and oil to form spray mixtures in the form of oil-in-water emulsions. Useful organic solvents include aromatics, especially the high-boiling naphthalenic and olefinic portions of petroleum such as heavy aromatic naphtha. Other organic solvents may also be used, for example, terpenic solvents, including rosin derivatives, aliphatic ketones, such as cyclohexanone, and complex alcohols, such as 2-ethoxyethanol.

Emulsifiers which may be advantageously employed herein may be readily determined by those skilled in the art

and include various nonionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil soluble salts (e.g., calcium) of alkylaryl sulphonic acids, oil-soluble salts or sulfated polyglycol ethers and appropriate salts of phosphated polyglycol ether.

Representative organic liquids which may be employed in preparing the emulsifiable concentrates of the compounds of the present disclosure are the aromatic liquids such as xylene, propyl benzene fractions; or mixed naphthalene fractions, mineral oils, substituted aromatic organic liquids such as dioctyl phthalate; kerosene; dialkyl amides of various fatty acids, particularly the dimethyl amides of fatty glycols and glycol derivatives such as the n-butyl ether, ethyl ether or methyl ether of diethylene glycol, the methyl ether of triethylene glycol, petroleum fractions or hydrocarbons such as mineral oil, aromatic solvents, paraffinic oils, and the like; vegetable oils such as soy bean oil, rape seed oil, olive oil, castor oil, sunflower seed oil, coconut oil, corn oil, cotton seed oil, linseed oil, palm oil, peanut oil, safflower oil, sesame oil, tung oil and the like; esters of the above vegetable oils; and the like. Mixtures of two or more organic liquids may also be employed in the preparation of the emulsifiable concentrate. Organic liquids include xylene, and propyl benzene fractions, with xylene being most preferred in some cases. Surface-active dispersing agents are typically employed in liquid formulations and in an amount of from 0.1 to 20 percent by weight based on the combined weight of the dispersing agent with one or more of the compounds. The formulations can also contain other compatible additives, for example, plant growth regulators and other biologically active compounds used in agriculture.

Aqueous suspensions comprise suspensions of the mixture of one or two of the additional fungicide and the compound of Formula I, dispersed in an aqueous vehicle at a concentration in the range from about 1 to about 50 weight percent, based on the total weight of the aqueous suspension. Suspensions are prepared by finely grinding one or more of the compounds, and vigorously mixing the ground material into a vehicle comprised of water and surfactants chosen from the same types discussed above. Other components, such as inorganic salts and synthetic or natural gums, may also be added to increase the density and viscosity of the aqueous vehicle.

The mixture of one or two of the additional fungicide and the compound of Formula I can also be applied as granular formulations, which are particularly useful for applications to the soil. Granular formulations generally contain from about 0.5 to about 10 weight percent, based on the total weight of the granular formulation of the compound(s), dispersed in an inert carrier which consists entirely or in large part of coarsely divided inert material such as attapulgite, bentonite, diatomite, clay or a similar inexpensive substance. Such formulations are usually prepared by dissolving the compounds in a suitable solvent and applying it to a granular carrier which has been performed to the appropriate particle size, in the range of from about 0.5 to about 3 mm. A suitable solvent is a solvent in which the compound is substantially or completely soluble. Such formulations may also be prepared by making a dough or paste of the carrier and the compound and solvent, and crushing and drying to obtain the desired granular particle.

Dusts containing the mixture of one or two of the additional fungicide and the compound of Formula I may be prepared by intimately mixing one or more of the compounds in powdered form with a suitable dusty agricultural carrier, such as, for example, kaolin clay, ground volcanic rock, and the like. Dusts can suitably contain from about 1 to about 10 weight percent of the compounds, based on the total weight of the dust.

Moreover, formulations such as suspensions (SC, OD, FS), emulsifiable concentrates (EC), pastes, pastilles and gel formulations are within the scope of the compositions disclosed herein. In some aspects, the composition is diluted. In some aspects, the composition is undiluted.

In one aspect, the composition comprises a synergistic composition comprising a compound of Formula I and one or two additional fungicides. In one aspect, the composition comprises the mixture of one or two of the additional fungicide and the compound of Formula I and a phytologically acceptable carrier. Preferably, the mixture of one or two of the additional fungicide and the compound of Formula I of the present disclosure are applied in the form of a composition.

In various aspects, the composition or formulation comprises the mixture of one or two of the additional fungicide and the compound of Formula I or tautomers, stereoisomers, salts, solvates or hydrates thereof.

In various aspects, the phytologically acceptable carrier includes, but is not limited to, one or more of: solvents, dispersants, emulsifiers e.g. solubilizers, protective colloids, surfactants and adhesion agents, organic and inorganic thickeners, bactericides, anti-freezing agents, anti-foaming agents, if appropriate colorants and tackifiers or binders (e.g. for seed treatment formulations).

In this context, suitable solvents for a formulation include water, alcohols such as methanol, ethanol, propanol, butanol or cyclohexanol, glycols, ketones such as cyclohexanone and gamma-butyrolactone, or a solvent such as mineral oil fractions of medium to high boiling point, kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their alkylated naphthalene derivatives, or a fatty acid or fatty acid dimethylamides, fatty acid esters and strongly polar solvents, e.g. amines such as N- methylpyrrolidone.

In various aspects, the phytologically acceptable carrier(s) is liquid. In various aspects, the phytologically acceptable carrier(s) is solid. In such aspects, a solid carrier may include, but is not limited to, magnesium sulfate, magnesium oxide, silicates, silica gels, lime, chalk, bole, loess, clays, dolomite, diatomaceous earth, talc, kaolins, limestone, calcium sulfate, fertilizers, such as, e.g., ammonium sulfate, ammonium phosphate, ammonium nitrate, ureas, and materials such of like of cereal meal, tree bark meal, wood meal and nutshell meal, and cellulose powders.

The formulations may additionally contain other phytologically acceptable carriers, such as adjuvant surfactants to enhance deposition, wetting, and penetration of the compounds onto the target crop and organism. These adjuvant surfactants may optionally be employed as a component of the formulation or as a tank mix. The amount of adjuvant surfactant will typically vary from 0.01 to 1.0 percent by volume, based on a spray-volume of water, preferably 0.05 to 0.5 volume percent. Suitable adjuvant surfactants include, but are not limited to ethoxylated nonyl phenols, ethoxylated synthetic or natural alcohols, salts of the esters or sulphosuccinic acids, ethoxylated organosilicones, ethoxylated fatty amines, blends of surfactants with mineral or vegetable oils, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; C9 - C11 alkylpolyglycoside; phosphated alcohol ethoxylate; natural primary alcohol (C12 - C16) ethoxylate; di-sec-butylphenol EO-PO block copolymer; polysiloxane-methyl cap; nonylphenol ethoxylate + urea ammonium nitrrate; emulsified methylated seed oil; tridecyl alcohol (synthetic) ethoxylate (8EO); tallow amine ethoxylate (15 EO); PEG(400) dioleate-99. These types of formulations may also include oil-in-water emulsions, such are described, and the procedures to make them are explained in U.S. Patent Application Serial No. 11/495,228, the disclosure of which is hereby incorporated in its entirety by reference herein.

Bactericides may be added for preservation and stabilization of the composition. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones suitable anti-freezing agents are ethylene glycol, propylene glycol, urea and glycerin.

Examples for anti-foaming agents are silicone emulsions (such as *e.g.* Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes.

Examples to be mentioned und the designations rhodamin B, C. I. pigment red 1 12, C. I. solvent red 1, pigment blue 15:4, pigment blue 15:3, pigment blue 15:2, pigment blue 15: 1, pigment blue 80, pigment yellow 1, pigment yellow 13, pigment red 112, pigment red 48:2, pigment red 48: 1, pigment red 57: 1, pigment red 53 : 1, pigment orange 43, pigment orange 34, pigment orange 5, pigment green 3

Example Formulation

Below is merely an example agricultural formulation that one skilled in the art could make with the formulation methods, the compounds and the carriers disclosed herein.

Suspensions formulation (either SC, OD, FS)

In an agitated ball mill, mix 20 parts by weight a mixture of the one or two additional fungicides and a compound of Formula I with 20 parts by weight, each, of block copolymer of ethylene oxide and propylene oxide (e.g. Pluronic® P-105) and alkylnaphthalene sulfonate condensate sodium salt (e.g. Morwet® D-425) dispersing/ wetting agents. Further, 60 parts by weight of fatty acid alkylester organic solvent is added and vigorous mixing gives a suspension concentrate. Dilution with water provides a stable suspension of the formulation. The one or two additional fungicides and the compound of Formula I combined together is 40% by weight.

### 4.3.3. Ranges

In various aspects, one or two additional fungicides and a compound of Formula I in the composition is present at a concentration of 10 ng/ mL, 50 ng/ mL, 100 ng/ mL, 500 ng/ mL, 1 ug/ mL, 10 ug/ mL, 50 ug/ mL, 75 ug/ mL, 0.1 mg/ml, 0.2 mg/ml, 0.3 mg/ml, 0.4 mg/ml, even 0.5 mg/ml. In some aspects, one or two additional fungicides and a compound of Formula I in the composition is present at a concentration of 1 mg/ml, 2 mg/ml, 3 mg/ml, 4 mg/ml or 5 mg/ml. In some aspects, one or two additional fungicides and a compound of Formula I in the composition is present at a concentration of 10 mg/ml, 20 mg/ml, 30 mg/ml, 40 mg/ml or 50 mg/ml. In some aspects, one or two additional fungicides and a compound of Formula I in the composition is present at a concentration of at least 100 mg/ml, 125 mg/ml, 150 mg/ml, 175 mg/ml, or 200 mg/ml.

In some fluid aspects, one or two additional fungicides and a compound of Formula I in the composition is present at a concentration of at least 250 mg/ml.

In certain fluid aspects, one or two additional fungicides and a compound of Formula I in the composition is present at a concentration from 0.1 mg/ml to 0.01 mg/ml.

In certain aspects, the weight ratio of Compound I to each additional fungicide at which the fungicidal effect is synergistic lies within the range of between about 1:1 and about 1:100.

In certain aspects, the weight ratio of Compound I to each additional fungicide at which the fungicidal effect is synergistic lies within the range of between about 1:1 and about 10:1.

The rate at which the synergistic composition is applied will depend upon the particular type of fungus to be controlled, the degree of control required and the timing and method of application. In general, the composition of the disclosure can be applied at an application rate of between about 20 grams per hectare (g/ha) and about 3000 g/ha based on the total amount of active ingredients in the composition.

In certain aspects, the synergistic composition is applied at an application rate of between about 65 grams per hectare (g/ha) and about 2300 g/ha based on the total amount of active ingredients in the composition.

In certain aspects, the synergistic composition is applied differentially with respect to the actives. In certain aspects, epoxiconazole is applied at a rate between about 30 g/ha and about 125 g/ha and the compound of Formula I is applied at a rate between about 35 g/ha and about 300 g/ha. In certain aspects, prothioconazole is applied at a rate between about 50 g/ha and about 200 g/ha and the compound of Formula I is applied at a rate between about 35 g/ha and about 300 g/ha. In certain aspects, azoxystrobin is applied at a rate between about 50 g/ha and about 250 g/ha and the compound of Formula I is applied at a rate between about 35 g/ha and about 300 g/ha. In certain aspects, pyraclostrobin is applied at a rate between about 50 g/ha and about 250 g/ha and the compound of Formula I is applied at a rate between about 35 g/ha and about 300 g/ha. In certain aspects, bixafen is applied at a rate between about 30 g/ha and about 125 g/ha and the compound of Formula I is applied at a rate between about 35 g/ha and about 300 g/ha. In certain aspects, chlorothalonil is applied at a rate between about 100 g/ha and about 2000 g/ha and the compound of Formula I is applied at a rate between about 35 g/ha and about 300 g/ha.

In certain aspects, picoxystrobin is applied at a rate between about 50 g/ha and about 200 g/ha and the compound of Formula I is applied at a rate between about 35 g/ha and about 300 g/ha. In certain aspects, benzovindiflupyr is applied at a rate between about 50 g/ha and about 200 g/ha and the compound of Formula I is applied at a rate between about 35 g/ha and about 300 g/ha.

The components of the synergistic mixture of the present disclosure can be applied either separately or as part of a multipart fungicidal system.

### 4.3.4. Methods of use

In one aspect, the disclosure provides for a use of the synergistic mixtures or compositions described herein for protection of a plant against attack by Asian soybean rust is caused by *Phakopsora pachyrhizi,* PHAKPA, or the treatment of a plant infested by Asian soybean rust is caused by *Phakopsora pachyrhizi,* PHAKPA, comprising the application of the synergistic mixtures or compositions described herein to soil, a plant, a part of a plant, foliage, and/or seeds.

In one aspect, the disclosure provides for a method for the control or prevention of Asian soybean rust. Such methods comprise applying to the soil, seed, plant, roots, foliage, or locus of the fungus, or to a locus in which the infestation is to be eradicated, controlled or prevented (for example applying to cereal or grape plants), a compound of the Formula I and one or two additional fungicides. These compounds are suitable for treatment of Asian soybean rust while exhibiting relatively low phytotoxicity. The compounds may be useful both in a protectant and/or an eradicant fashion.

The compounds of the present disclosure may be applied by any of a variety of known techniques, either as a mixture of the compounds or as formulations comprising the mixture of compounds. Further, the mixture or composition may be applied to the roots, seeds or foliage of plants for the control of various fungi, without damaging the commercial value of the plants. The materials may be applied in the form of any of the generally used formulation types, for example, as solutions, dusts, wettable powders, flowable concentrates, or emulsifiable concentrates.

The exact amount of the active material to be applied is dependent not only on the specific active material being applied, but also on the particular action desired and the stage of growth thereof, as well as the part of the plant or other product to be contacted with the compound. Thus, all the compounds, and formulations containing the same, may not be equally effective at similar concentrations.

In some aspects, the compounds of Formula I and one or more additional fungicide are effective for use in any amount. In some aspects, compounds of Formula I and one or more additional fungicide are effective for use in an effective amount. In some aspects, compounds of Formula I and one or more additional fungicide are effective for use in in an agricultural composition in any amount. In some aspects, compounds of Formula I and one or more additional fungicide are effective for use in in an agricultural composition in a phytologically acceptable amount. In some aspects, compounds of Formula I and one or more additional fungicide are effective for use in in an agricultural composition in an effective amount.

In some aspects, compounds of Formula I and one or more additional fungicide are effective in use with plants in a phytologically acceptable amount. This amount will generally be from about 0.1 to about 1000 ppm (parts per million), with

1 to 500 ppm being preferred. The exact concentration of compound required varies with the fungal disease to be controlled, the type of formulation employed, the method of application, the particular plant species, climate conditions, and the like. A suitable application rate is typically in the range from about 0.10 to about 4 pounds/acre (about 0.01 to 0.45 grams per square meter, g/m2).

In one aspect, the disclosure provides for a method of protecting a plant against attack by Asian soybean rust caused by *Phakopsora pachyrhizi,* PHAKPA, and/or a method of treating a plant infested or infested by Asian soybean rust caused by *Phakopsora pachyrhizi,* PHAKPA, the method comprising contacting an effective amount of a compound of Formula I and one or more additional fungicide to at least one of: a fungus, a plant, and/or an area adjacent to a plant. In some aspects, the disclosure provides for methods wherein the compounds are formulated in a composition. In some aspects these compositions are suitable for agricultural purposes.

In some aspects, the disclosure provides for a method of controlling fungal attack on a plant, the method comprising contacting a seed, an area adjacent to the plant, soil adapted to support growth of the plant, a root of the plant, and/or foliage of the plant, with a compound of Formula I and one or more additional fungicide, or an agricultural composition thereof. In some aspects, the disclosure provides for a method of controlling fungal attack on a plant, the method comprising contacting a seed, an area adjacent to the plant, soil adapted to support growth of the plant, a root of the plant, and/or foliage of the plant, with a phytologically acceptable amount of a compound of Formula I and one or more additional fungicide, or an agricultural composition thereof.

In some aspects, the disclosure provides for a method of controlling fungal attack on a plant, the method comprising contacting a seed, an area adjacent to the plant, soil adapted to support growth of the plant, a root of the plant, and/or foliage of the plant, with a phytologically acceptable amount of a compound of any one of embodiments or aspects or in the Examples described herein, or an agricultural composition thereof. In some aspects, the disclosure provides for a method of controlling fungal attack on a plant, the method comprising contacting a seed, an area adjacent to the plant, soil adapted to support growth of the plant, a root of the plant, and/or foliage of the plant, with a phytologically acceptable amount of a compound of any one of embodiments or aspects or in the Examples described herein, or an agricultural composition thereof.

In some aspects, the disclosure provides for a method of controlling fungal attack on a plant, the method comprising contacting a seed, an area adjacent to the plant, soil adapted to support growth of the plant, a root of the plant, and/or foliage of the plant, with a fungicide composition comprising a phytologically acceptable amount of a compound of any one of embodiments or aspects or in the Examples described herein and a carrier.

In some aspects, the disclosure provides for methods wherein the composition carrier is one or more of a thickener, emulsifier, rheology agent, dispersant and/or solid carrier.

In some aspects, the disclosure provides for methods wherein the soil concentration, surrounding the plant, increases with respect to at least one of the following elemental nutrients: nitrogen, phosphorus, potassium, magnesium, sulfur, calcium, boron, chlorine, manganese, iron, nickel, copper, zinc, molybdenum, hydrogen, carbon, and/or oxygen. In some aspects, the disclosure provides for methods wherein the soil concentration, surrounding the plant, of total nitrogen increases. In some aspects, the disclosure provides for methods wherein the soil concentration, surrounding the plant, of total sulfur increases. In some aspects, the disclosure provides for methods wherein the soil concentration, surrounding the plant, of total phosphorus increases.

In some aspects, the disclosure provides for methods wherein the soil concentration, surrounding the plant, of nitrate increases. In some aspects, the disclosure provides for methods wherein the soil concentration, surrounding the plant, of calcium increases.

In some aspects, the disclosure provides for methods wherein the level of biological materials or solids including sugar or even the whole of, or any two of, or any one of: sugars, amino acids, vitamins, phytohormones, minerals, *etc.*, within the plant sap and/or tissue increases as measured on the Brix scale. The skilled artisan in this field is aware of how to perform such measurements and calculations, as this measure has been used for long time to test fruit like grapes and apples for ripeness. Anyway, such routine operations are done by refractive index as well as by density and one skilled in the art can consult a horticulture publications such as Using °Brix as an Indicator of Vegetable Quality: Instructions for Measuring °Brix in Cucumber, Leafy Greens, Sweet Corn, Tomato, and Watermelon, HYG-1653, Matthew D. Kleinhenz and Natalie R. Bumgarner, Department of Horticulture and Crop Science, The Ohio State University, Ohio Agricultural Research and Development Center, 2015, the entirety of which is hereby incorporated by reference. In some aspects, the disclosure provides for methods wherein the level of biological materials or solids within the plant sap and/or tissue increases to about 8% on the Brix scale. In some aspects, the disclosure provides for methods wherein the level of biological materials or solids within the plant sap and/or tissue increases to about 10% on the Brix scale. In some aspects, the disclosure provides for methods wherein the level of biological materials or solids within the plant sap and/or tissue increases to about 12% on the Brix scale.

In some aspects, the disclosure provides for methods wherein the pH of the soil, surrounding the plant, increases. In some aspects, the pH of the soil, surrounding the plant, increases by about 0.1, 0.2, 0.3, 0.4, 0.5, 0.6, 0.7, 0.8, 0.9, 1.0, 1.25, 1.5, 1.75, 2, 2.5, 3, 3.5, or4 on the pH scale. In some aspects, the pH of the soil, surrounding the plant, increases to

about 7.5, 8, 8.5, 9, 9.5 or 10 on the pH scale.

In some aspects, the disclosure provides for a method of protecting a plant against attack by a phytopathogenic organism and/or a method of treating a plant infested by a phytopathogenic organism, wherein the provided compound inhibits one or more species of fungi at an MIC of 0.1-2 μg/mL.

The present disclosure includes within its scope methods for the control or prevention of fungal attack. These methods comprise applying to the locus of the fungus, or to a locus in which the infestation is to be prevented, a fungicidally effective amount of the synergistic composition. The synergistic composition is suitable for treatment of plants at fungicidal levels, while exhibiting low phytotoxicity. The synergistic composition is useful in a protectant or eradicant fashion. The synergistic composition is applied by any of a variety of known techniques, either as the synergistic composition or as a formulation comprising the synergistic composition. For example, the synergistic compositions may be applied to the roots, seeds or foliage of plants for the control of various fungi, without damaging the commercial value of the plants. The synergistic composition is applied in the form of any of the generally used formulation types, for example, as solutions, dusts, wettable powders, flowable concentrates, or emulsifiable concentrates. These materials are conveniently applied in various known fashions.

The synergistic compositions have a broad range of efficacy as a fungicide. The exact amount of the synergistic composition to be applied is dependent not only on the relative amounts of the components, but also on the particular action desired and the stage of growth thereof, as well as the part of the plant or other product to be contacted with the synergistic composition. Thus, formulations containing the synergistic composition may not be equally effective at similar concentrations.

In some aspects, the disclosure provides for a compound of Formula I and one or two additional fungicides, or an agricultural composition thereof, for use in the control of Asian soybean rust. In some aspects, the disclosure provides for a mixture or composition of a compound of Formula I and a fungicide from any one of embodiments or aspects or in the Examples described herein, or an agricultural composition thereof for use in the control of Asian soybean rust.

In some aspects, the disclosure provides for a compound or agricultural composition for use wherein the *Phakopsora pachyrhizi* and/or Asian soybean rust is according to any of the aspects or embodiments or in the Examples described herein.

In some aspects, the disclosure provides for compositions, methods or uses according to the following:

21. The use according to any one of the previous aspects wherein the additional fungicide is applied at a rate between 20 g/H and 3000 g/H and the compound of Formula I is applied at a rate between 20 g/H and 300 g/H, based on the total amount of active ingredients in the composition.

22. The use according to any one of the previous aspects wherein the additional fungicide is selected from the group consisting of: picoxystrobin, trifloxystrobin, benzovindiflupyr, pyraclostrobin, fluxapyroxad, mefentrifluconazole and any combinations thereof.

23. The mixture or the composition according to any one of the previous aspects for controlling Asian soybean rust in an area near or around or on a plant.

24. The mixture or the composition according to any one of the previous aspects in which the Asian soybean rust is caused by (Phakopsora pachyrhizi, PHAKPA).

25. The mixture or the composition according to any one of the previous aspects wherein the composition or mixture is applied at an application rate of between 20 grams per hectare (g/H) to 3000 g/H, based on the total amount of active ingredients in the composition.

26. The mixture or the composition according to any one of the previous aspects wherein the additional fungicide is applied at a rate between 20 g/H and 3000 g/H and the compound of Formula I is applied at a rate between 20 g/H and 300 g/H, based on the total amount of active ingredients in the composition.

27. The mixture or the composition according to any one of the previous aspects wherein the additional fungicide is selected from the group consisting of:
picoxystrobin, trifloxystrobin, benzovindiflupyr, pyraclostrobin, fluxapyroxad, mefentrifluconazole and any combinations thereof.

28. A method of controlling Asian soybean rust on a plant, the method comprising contacting: the plant and/or an area adjacent to the plant with a (synergistic) fungicidal mixture, the mixture comprising a fungicidally effective amount of the mixture or composition according to any one of the previous aspects.

29. The method according to any one of the previous aspects in which the Asian soybean rust is caused by (Phakopsora pachyrhizi, PHAKPA).

30. The method according to any one of the previous aspects wherein the composition or mixture is applied at an application rate of between 20 grams per hectare (g/H) to 3000 g/H, based on the total amount of active ingredients in the composition.

31. The method according to any one of the previous aspects wherein the additional fungicide is applied at a rate between 20 g/H and 3000 g/H and the compound of Formula I is applied at a rate between 20 g/H and 300 g/H, based

on the total amount of active ingredients in the composition.

32. The method according to any one of the previous aspects wherein the additional fungicide is selected from the group consisting of: picoxystrobin, trifloxystrobin, benzovindiflupyr, pyraclostrobin, fluxapyroxad, mefentrifluconazole and any combinations thereof.

33. A method of controlling Asian soybean rust on a plant, the method comprising contacting: the plant and/or an area adjacent to the plant or a seed with a (synergistic) fungicidal mixture, the mixture comprising a fungicidally effective amount for each of the following components:

a compound of Formula I: ;

and one or two additional fungicides selected from the group consisting of: a MET III Qi inhibitor, a succinate dehydrogenase inhibitors (SDHI), a MET III Qo inhibitor, a multi-site inhibitor (MSI), a sterol biosynthesis inhibitors (SBI) and any combinations thereof.

34. The method according to any one of the previous aspects comprising one additional fungicide.

35. The method according to any one of the previous aspects comprising two additional fungicides.

36. The method according to any one of the previous aspects wherein each additional fungicide is selected from the group consisting of: benzovindiflupyr, fluxapyroxad, bixafen, pydiflumetofen, picoxystrobin, azoxystrobin, pyraclostrobin, trifloxystrobin, metominostrobin, prothioconazole, epoxiconazole, tebuconazole, cyproconazole, difenoconazole, mefentrifluconazole, propiconazole, tetraconazole, fenpropimorph, chlorothalonil, mancozeb, Cu oxychloride and any combinations thereof.

37. The method according to any one of the previous aspects wherein the weight ratio of Compound I to each additional fungicide is between about 1:1 and about 1:100.

38. The method according to any one of the previous aspects wherein the weight ratio of Compound I to each additional fungicide is between about 1:1 and about 10:1.

39. The method according to any one of the previous aspects wherein the mixture comprises one additional fungicide which is a SDHI.

40. The method according to any one of the previous aspects wherein the mixture comprises one additional fungicide which is a SBI.

41. The method according to any one of the previous aspects wherein the mixture comprises one additional fungicide which is a MET III Qi inhibitor.

42. The method according to any one of the previous aspects wherein the mixture comprises one additional fungicide which is a MET III Qo inhibitor.

43. The method according to any one of the previous aspects wherein the mixture comprises one additional fungicide which is picoxystrobin.

44. The method according to any one of the previous aspects wherein the mixture comprises one additional fungicide which is benzovindiflupyr.

45. The method according to any one of the previous aspects wherein the mixture comprises two additional fungicides which are benzovindiflupyr and picoxystrobin.

46. The method according to any one of the previous aspects wherein the mixture comprises one additional fungicide and Compound I; and wherein the additional fungicide and Compound I have a different mode of activity.

47. The method according to any one of the previous aspects wherein the mixture comprises two additional fungicides and Compound I; and wherein one additional fungicide and Compound I have a different mode of activity.

48. The method according to any one of the previous aspects wherein the mixture comprises two additional fungicides; and wherein the two additional fungicides each have a different mode of activity.

49. The method according to any one of the previous aspects wherein the Asian soybean rust is caused by (Phakopsora pachyrhizi, PHAKPA).

50. The method according to any one of the previous aspects wherein the composition or mixture is applied at an application rate of between 20 grams per hectare (g/H) to 3000 g/H, based on the total amount of active ingredients in the composition.

51. The method according to any one of the previous aspects wherein the additional fungicide is applied at a rate between 20 g/H and 3000 g/H and the compound of Formula I is applied at a rate between 20 g/H and 300 g/H, based on the total amount of active ingredients in the composition.

52. The method according to any one of the previous aspects wherein the method further comprises contacting with a fungicidal composition comprising the mixture and an agriculturally acceptable adjuvant or carrier.

**4.3.5. Seed treatment**

In some aspects, the disclosure provides for a seed treated with a mixture of a compound of Formula I and one or

two additional fungicides, as described herein, or an agricultural composition thereof. In some aspects, the disclosure provides for a seed treated with a mixture of a compound of Formula I and one or two additional fungicides, as described in any one of embodiments or aspects or in the Examples described herein, or an agricultural composition thereof. In some of these aspects, the amount of a compound of Formula I and one or two additional fungicides or the amount of one or two additional fungicides of any one of embodiments or aspects or in the Examples described herein is a phytologically acceptable amount. In some of these aspects, the amount of compound of Formula I and one or two additional fungicides of any one of embodiments or aspects or in the Examples described herein is an effective amount.

In some aspects, the disclosure provides for a method of controlling fungal attack on a plant, the method comprising contacting a seed with a mixture of a compound of Formula I and one or two additional fungicides, as described herein, or an agricultural composition thereof. In some aspects, the disclosure provides for a method of controlling fungal attack on a plant, the method comprising contacting a seed with a compound of any one of embodiments or aspects or as those mixtures and/or compositions described in the Examples, or an agricultural composition thereof. In some of these aspects, the amount of a mixture of a compound of Formula I and one or two additional fungicides of any one of embodiments or aspects or in the Examples described herein is an effective amount.

The synergistic compositions are effective in use with plants in a disease-inhibiting and phytologically acceptable amount. The term "disease-inhibiting and phytologically acceptable amount" refers to an amount of the synergistic composition that kills or inhibits the plant disease for which control is desired, but is not significantly toxic to the plant. The exact concentration of synergistic composition required varies with the fungal disease to be controlled, the type of formulation employed, the method of application, the particular plant species, climate conditions, and the like.

The present compositions can be applied to fungi or their locus by the use of conventional ground sprayers, granule applicators, and by other conventional means known to those skilled in the art.

## 5. EXAMPLES

The following synthetic and biological examples are offered to illustrate this the present technology and are not to be construed in any way as limiting the scope of this the present technology. Unless otherwise stated, all temperatures are in degrees Celsius.

The examples are offered for illustrative purposes only, and are not intended to limit the scope of the present disclosure in any way. Efforts have been made to ensure accuracy with respect to numbers used (e.g., amounts, temperatures, etc.), but some experimental error and deviation should, of course, be allowed for.

The practice of the present disclosure may employ conventional methods of organic synthetic chemistry, as well as biochemistry, recombinant DNA techniques which within the skill of the art. Such techniques are explained fully in the literature. See, *e.g.,* T.E. Creighton, Proteins: Structures and Molecular Properties (W.H. Freeman and Company, 1993); A.L. Lehninger, Biochemistry (Worth Publishers, Inc., current addition); Sambrook, et al., Molecular Cloning: A Laboratory Manual (2nd Edition, 1989); Methods In Enzymology (S. Colowick and N. Kaplan eds., Academic Press, Inc.); Remington's Pharmaceutical Sciences, 18th Edition (Easton, Pennsylvania: Mack Publishing Company, 1990); Carey and Sundberg Advanced Organic Chemistry 3rd Ed. (Plenum Press) Vols A and B(1992), and Organic Reactions, Volumes 1-40 (John Wiley, and Sons, 1991).

The present technology is further understood by reference to the following examples, which are intended to be purely exemplary of the present technology. The present technology is not limited in scope by the exemplified aspects, which are intended as illustrations of single aspects of the present technology only. Any methods that are functionally equivalent are within the scope of the present technology. Various modifications of the present technology in addition to those described herein will become apparent to those skilled in the art from the foregoing description and accompanying figures. Such modifications fall within the scope of the appended claims.

General experimental details:

Fungicides were evaluated vs. PHAKPA either alone or in binary or ternary mixtures by combining each fungicide with Compound I. Technical grades of materials were dissolved in 1.5 ml of acetone, which were then mixed with 13.5 ml of water containing 0.011% Tween 20. The fungicide solutions were applied onto soybean seedlings using an automated booth sprayer to run-off. All sprayed plants were allowed to air dry prior to further handling. Soybean plants (variety Williams 82) were grown in soil-less Metro mix, with one plant per pot. Two weeks old seedlings were used for testing. Plants were inoculated either 3 days prior to or 1 day after fungicide treatments. Plants were incubated for 24 h in a dark dew room at 22 °C and 100 % RH then transferred to a growth room at 23 °C for disease to develop. Once disease fully expressed on untreated plants, disease severity was assessed on the sprayed monofoliate leaves.
Synergy factors were calculated using Colby's method. The expected disease control (%DC exp) of a mixture consisting of two or three components can be predicted by the following formula:

$$\%DC_{exp} = A + B - (AB/100)$$

$$\%DC_{exp} = A + B + C - (AB/100) - (AC/100) - (BC/100) + (ABC/10000)$$

where A, B, C are the percent disease control given by the individual fungicide component at the defined rate in the mixture. If the ratio (synergy factor) between the observed disease control of the mixture (%DC $_{obs}$) and the expected disease control of the mixture (%DC $_{exp}$) is greater than 1, synergistic interaction is present.

**Example 1. Synergistic interactions between XR-747 and picoxystrobin were detected in curative and protectant treatments vs. PHAKPA (Tables 1-2).**

Table 1. Synergistic interactions between compound I and picoxystrobin in 1-day protectant (1DP) PHAKPA test

| Treatment | Compoun d I rate ppm | Picoxystro bin rate ppm | %DC obs | %DC exp | Synerg y factor |
|---|---|---|---|---|---|
| Compound I | 0.098 | | 3.8 | | |
| Compound I | 0.39 | | 79.2 | | |
| Picoxystrobin | | 0.049 | 3.8 | | |
| Picoxystrobin | | 0.195 | 0.0 | | |
| Picoxystrobin | | 0.78 | 80.0 | | |
| Compound I + Picoxystrobin | 0.098 | 0.049 | 30.7 | 7.4 | 4.15 |
| Compound I + Picoxystrobin | 0.098 | 0.195 | 71.5 | 3.8 | 18.96 |
| Compound I + Picoxystrobin | 0.098 | 0.78 | 95.4 | 80.7 | 1.18 |
| Compound I + Picoxystrobin | 0.39 | 0.049 | 85.4 | 80.0 | 1.07 |
| Compound I + Picoxystrobin | 0.39 | 0.195 | 93.1 | 79.2 | 1.17 |

Table 2. Synergistic interactions between compound I and picoxystrobin in 3-day curative (3DC) PHAKPA test

| Treatment | Compoun d I rate ppm | Picoxystro bin rate ppm | %DC obs | %DC exp | Synerg y factor |
|---|---|---|---|---|---|
| Compound I | 0.098 | | 14.8 | | |
| Compound I | 0.39 | | 25.9 | | |
| Picoxystrobin | | 0.049 | 18.5 | | |
| Picoxystrobin | | 0.195 | 14.8 | | |
| Picoxystrobin | | 0.78 | 53.3 | | |
| Compound I + Picoxystrobin | 0.098 | 0.195 | 51.9 | 27.4 | 1.89 |
| Compound I + Picoxystrobin | 0.098 | 0.78 | 85.2 | 60.2 | 1.41 |
| Compound I + Picoxystrobin | 0.39 | 0.049 | 44.4 | 39.6 | 1.12 |
| Compound I + Picoxystrobin | 0.39 | 0.195 | 84.4 | 36.9 | 2.29 |
| Compound I + Picoxystrobin | 0.39 | 0.78 | 94.1 | 65.4 | 1.44 |

**Example 2. Synergistic interactions between XR-747 and azoxystrobin were detected in curative and protectant treatments vs. PHAKPA (Tables 3-4).**

Table 3. Synergistic interactions between compound I and azoxystrobin in 1-day protectant (1DP) PHAKPA test

| Treatment | Compoun d I rate ppm | Azoxystro bin rate ppm | %DC obs | %DC exp | Synerg y factor |
|---|---|---|---|---|---|
| Compound I | 0.098 | | 33.3 | | |
| Azoxystrobin | | 0.024 | 22.2 | | |
| Azoxystrobin | | 0.098 | 50.4 | | |
| Compound I+Azoxystrobin | 0.098 | 0.024 | 66.7 | 48.1 | 1.38 |
| Compound I+Azoxystrobin | 0.098 | 0.098 | 80.0 | 66.9 | 1.20 |

Table 4. Synergistic interactions between compound I and azoxystrobin in 3-day curative (3DC) PHAKPA test

| Treatment | Compoun d I rate ppm | Azoxystro bin rate ppm | %DC obs | %DC exp | Synerg y factor |
|---|---|---|---|---|---|
| Compound I | 0.098 | | 5.8 | | |
| Compound I | 0.39 | | 44.6 | | |
| Compound I | 1.56 | | 77.6 | | |
| Azoxystrobin | | 0.39 | 31.7 | | |
| Compound I+Azoxystrobin | 0.098 | 0.39 | 63.5 | 35.6 | 1.78 |
| Compound I+Azoxystrobin | 0.39 | 0.39 | 89.4 | 62.2 | 1.44 |
| Compound I+Azoxystrobin | 1.56 | 0.39 | 92.9 | 84.7 | 1.10 |

**Example 3. Synergistic interactions between XR-747 and tebuconazole were detected in curative and protectant treatments vs. PHAKPA (Tables 5-6).**

Table 5. Synergistic interactions between compound I and tebuconazole in 1-day protectant (1DP) PHAKPA test

| Treatment | Compoun d I rate ppm | Tebucona zole rate ppm | %DC obs | %DC exp | Synerg y factor |
|---|---|---|---|---|---|
| Compound I | 0.098 | | 33.3 | | |
| Tebuconazole | | 0.0015 | 0.0 | | |
| Tebuconazole | | 0.006 | 11.1 | | |
| Compound I+Tebuconazole | 0.098 | 0.0015 | 51.9 | 33.3 | 1.56 |
| Compound I+Tebuconazole | 0.098 | 0.006 | 54.1 | 40.7 | 1.33 |

Table 6. Synergistic interactions between compound I and tebuconazole in 3-day curative (3DC) PHAKPA test

| Treatment | Compoun d I rate ppm | Tebucona zole rate ppm | %DC obs | %DC exp | Synerg y factor |
|---|---|---|---|---|---|
| Compound I | 0.098 | | 5.8 | | |
| Compound I | 0.39 | | 44.6 | | |
| Compound I | 1.56 | | 77.6 | | |
| Tebuconazole | | 0.0015 | 0.0 | | |
| Tebuconazole | | 0.006 | 0.0 | | |
| Tebuconazole | | 0.024 | 11.7 | | |
| Compound I+Tebuconazole | 0.098 | 0.024 | 39.9 | 16.8 | 2.38 |

(continued)

| Treatment | Compoun d I rate ppm | Tebucona zole rate ppm | %DC obs | %DC exp | Synerg y factor |
|---|---|---|---|---|---|
| Compound I+Tebuconazole | 0.39 | 0.024 | 74.1 | 51.1 | 1.45 |
| Compound I+Tebuconazole | 1.56 | 0.0015 | 82.3 | 77.6 | 1.06 |
| Compound I+Tebuconazole | 1.56 | 0.006 | 81.2 | 77.6 | 1.05 |
| Compound I+Tebuconazole | 1.56 | 0.024 | 89.4 | 80.2 | 1.11 |

**Example 4. Synergistic interactions between XR-747 and epoxiconazole were detected in curative and protectant treatments vs. PHAKPA (Tables 7-8).**

Table 7. Synergistic interactions between compound I and epoxiconazole in 1-day protectant (1DP) PHAKPA test

| Treatment | Compoun d I rate ppm | Epoxicona zole rate ppm | %DC obs | %DC exp | Synerg y factor |
|---|---|---|---|---|---|
| Compound I | 0.098 | | 33.3 | | |
| Epoxiconazole | | 0.006 | 3.7 | | |
| Epoxiconazole | | 0.024 | 48.1 | | |
| Compound I+Epoxiconazole | 0.098 | 0.006 | 44.4 | 35.8 | 1.24 |
| Compound I+Epoxiconazole | 0.098 | 0.024 | 88.9 | 65.4 | 1.36 |

Table 8. Synergistic interactions between compound I and epoxiconazole in 3-day curative (3DC) PHAKPA test

| Treatment | Compoun d I rate ppm | Epoxicona zole rate ppm | %DC obs | %DC exp | Synerg y factor |
|---|---|---|---|---|---|
| Compound I | 1.56 | | 77.6 | | |
| Epoxiconazole | | 0.024 | 0.0 | | |
| Compound I+Epoxiconazole | 1.56 | 0.024 | 83.5 | 77.6 | 1.08 |

**Example 5. Synergistic interactions between XR-747 and pyraclostrobin were detected in curative and protectant treatments vs. PHAKPA (Tables 9-10).**

Table 9. Synergistic interactions between compound I and pyraclostrobin in 1-day protectant (1DP) PHAKPA test

| Treatment | Compoun d I rate ppm | Pyraclostr obin rate ppm | %DC obs | %DC exp | Synerg y factor |
|---|---|---|---|---|---|
| Compound I | 0.098 | | 33.3 | | |
| Pyraclostrobin | | 0.098 | 14.8 | | |
| Compound I+Pyraclostrobin | 0.098 | 0.098 | 66.7 | 43.2 | 1.54 |

Table 10. Synergistic interactions between compound I pyraclostrobin in 3-day curative (3DC) PHAKPA test

| Treatment | Compoun d I rate ppm | Pyraclostr obin rate ppm | %DC obs | %DC exp | Synerg y factor |
|---|---|---|---|---|---|
| Compound I | 0.098 | | 5.8 | | |
| Compound I | 0.39 | | 44.6 | | |

(continued)

| Treatment | Compoun d I rate ppm | Pyraclostr obin rate ppm | %DC obs | %DC exp | Synerg y factor |
|---|---|---|---|---|---|
| Compound I | 1.56 | | 77.6 | | |
| Pyraclostrobin | | 0.39 | 0.0 | | |
| Pyraclostrobin | | 1.56 | 0.0 | | |
| Compound I+Pyraclostrobin | 0.098 | 1.56 | 44.6 | 5.8 | 7.73 |
| Compound I+Pyraclostrobin | 0.39 | 0.39 | 48.2 | 44.6 | 1.08 |
| Compound I+Pyraclostrobin | 0.39 | 1.56 | 80.0 | 44.6 | 1.79 |
| Compound I+Pyraclostrobin | 1.56 | 0.39 | 89.4 | 77.6 | 1.15 |
| Compound I+Pyraclostrobin | 1.56 | 1.56 | 92.9 | 77.6 | 1.20 |

**Example 6. Synergistic interactions between XR-747 and fluxapyroxad were detected in curative and protectant treatments vs. PHAKPA (Tables 11-12).**

Table 11. Synergistic interactions between compound I and fluxapyroxad in 1-day protectant (1DP) PHAKPA test

| Treatment | Compoun d I rate ppm | Fluxapyro xad rate ppm | %DC obs | %DC exp | Synerg y factor |
|---|---|---|---|---|---|
| Compound I | 0.098 | | 33.3 | | |
| Fluxapyroxad | | 0.195 | 3.7 | | |
| Fluxapyroxad | | 0.78 | 11.1 | | |
| Fluxapyroxad | | 3.125 | 80.0 | | |
| Compound I+Fluxapyroxad | 0.098 | 0.195 | 93.3 | 35.8 | 2.61 |
| Compound I+Fluxapyroxad | 0.098 | 0.78 | 66.7 | 40.7 | 1.64 |
| Compound I+Fluxapyroxad | 0.098 | 3.125 | 91.1 | 86.7 | 1.05 |

Table 12. Synergistic interactions between compound I and fluxapyroxad in 3-day curative (3DC) PHAKPA test

| Treatment | Compound I rate ppm | Fluxapyro xad rate ppm | %DC obs | %DC exp | Synergy factor |
|---|---|---|---|---|---|
| Compound I | 0.098 | | 5.8 | | |
| Fluxapyroxad | | 0.195 | 0.0 | | |
| Fluxapyroxad | | 3.125 | 17.6 | | |
| Compound I+Fluxapyroxad | 0.098 | 0.195 | 32.9 | 5.8 | 5.69 |
| Compound I+Fluxapyroxad | 0.098 | 3.125 | 25.8 | 22.3 | 1.16 |

**Example 7. Synergistic interactions between XR-747 and benzovindiflupyr were detected in curative and protectant treatments vs. PHAKPA (Tables 13-14).**

Table 13. Synergistic interactions between compound I and benzovindiflupyr in 1-day protectant (1DP) PHAKPA test

| Treatment | Compou nd I rate ppm | Benzovindifl upyr rate ppm | %DC obs | %DC exp | Synerg y factor |
|---|---|---|---|---|---|
| Compound I | 0.098 | | 33.3 | | |

(continued)

| Treatment | Compou nd I rate ppm | Benzovindifl upyr rate ppm | %DC obs | %DC exp | Synerg y factor |
|---|---|---|---|---|---|
| Benzovindiflupyr | | 0.195 | 3.7 | | |
| Benzovindiflupyr | | 0.78 | 11.1 | | |
| Benzovindiflupyr | | 3.125 | 80.0 | | |
| Compound I+Benzovindiflupyr | 0.098 | 0.195 | 44.4 | 35.8 | 1.24 |
| Compound I+Benzovindiflupyr | 0.098 | 0.78 | 91.1 | 40.7 | 2.24 |
| Compound I+Benzovindiflupyr | 0.098 | 3.125 | 100.0 | 86.7 | 1.15 |

Table 14. Synergistic interactions between compound I and benzovindiflupyr in 3-day curative (3DC) PHAKPA test

| Treatment | Compou nd I rate ppm | Benzovindifl upyr rate ppm | %DC obs | %DC exp | Synerg y factor |
|---|---|---|---|---|---|
| Compound I | 0.098 | | 5.8 | | |
| Compound I | 1.56 | | 77.6 | | |
| Benzovindiflupyr | | 0.78 | 11.7 | | |
| Compound I+Benzovindiflupyr | 0.098 | 0.78 | 17.6 | 16.8 | 1.05 |
| Compound I+Benzovindiflupyr | 1.56 | 0.78 | 88.2 | 80.2 | 1.10 |

**Example 8. Synergistic interactions between XR-747 and prothioconazole were detected in protectant treatment vs. PHAKPA (Table 15).**

Table 15. Synergistic interactions between compound I and prothioconazole in 1-day protectant (1DP) PHAKPA test

| Treatment | Compou nd I rate ppm | Prothiocona zole rate ppm | %DC obs | %DC exp | Synerg y factor |
|---|---|---|---|---|---|
| Compound I | 0.098 | | 33.3 | | |
| Prothioconazole | | 0.0015 | 0.0 | | |
| Prothioconazole | | 0.006 | 7.4 | | |
| Compound I+Prothioconazole | 0.098 | 0.0015 | 40.7 | 33.3 | 1.22 |
| Compound I+Prothioconazole | 0.098 | 0.006 | 48.1 | 38.3 | 1.26 |

**Example 9. Synergistic interactions between XR-747 and cyproconazole were detected in protectant treatment vs. PHAKPA (Table 16).**

Table 16. Synergistic interactions between compound I and cyproconazole in 1-day protectant (1DP) PHAKPA test

| Treatment | Compoun d I rate ppm | Cyprocon azole rate ppm | %DC obs | %DC exp | Synerg y factor |
|---|---|---|---|---|---|
| Compound I | 0.098 | | 33.3 | | |
| Compound I | 0.39 | | 90.4 | | |
| Cyproconazole | | 0.0015 | 11.1 | | |
| Cyproconazole | | 0.006 | 3.7 | | |
| Cyproconazole | | 0.024 | 11.1 | | |

(continued)

| Treatment | Compoun d I rate ppm | Cyprocon azole rate ppm | %DC obs | %DC exp | Synerg y factor |
|---|---|---|---|---|---|
| Compound I+Cyproconazole | 0.098 | 0.0015 | 48.1 | 40.7 | 1.18 |
| Compound I+Cyproconazole | 0.098 | 0.006 | 40.7 | 35.8 | 1.14 |
| Compound I+Cyproconazole | 0.39 | 0.024 | 96.3 | 91.4 | 1.05 |

**Example 10. Synergistic interactions between XR-747 and bixafen were detected in protectant and curative treatments vs. PHAKPA (Tables 17-18).**

Table 17. Synergistic interactions between compound I and bixafen in 1-day protectant (1DP) PHAKPA test

| Treatment | Compoun d I rate ppm | Bixafen rate ppm | %DC obs | %DC exp | Synerg y factor |
|---|---|---|---|---|---|
| Compound I | 0.098 | | 33.3 | | |
| Bixafen | | 0.195 | 0.0 | | |
| Compound I+Bixafen | 0.098 | 0.195 | 65.2 | 33.3 | 1.96 |

Table 18. Synergistic interactions between compound I and bixafen in 3-day curative (3DC) PHAKPA test

| Treatment | Compoun d I rate ppm | Bixafen rate ppm | %DC obs | %DC exp | Synerg y factor |
|---|---|---|---|---|---|
| Compound I | 1.56 | | 77.6 | | |
| Bixafen | | 0.78 | 0.0 | | |
| Bixafen | | 3.125 | 0.0 | | |
| Compound I+Bixafen | 1.56 | 0.78 | 88.2 | 77.6 | 1.14 |
| Compound I+Bixafen | 1.56 | 3.125 | 84.7 | 77.6 | 1.09 |

**Example 11. Synergistic interactions between XR-747 and chlorothalonil were detected in** protectant **and curative treatments vs. PHAKPA (Tables 19-20).**

Table 19. Synergistic interactions between compound I and chlorothalonil in 1-day protectant (1DP) PHAKPA) test

| Treatment | Compoun d I rate ppm | chlorothal onil rate ppm | %DC obs | %DC exp | Synerg y factor |
|---|---|---|---|---|---|
| Compound I | 0.098 | | 14.9 | | |
| Chlorothalonil | | 37.5 | 0.0 | | |
| Chlorothalonil | | 75 | 87.0 | | |
| Compound I+Chlorothalonil | 0.098 | 37.5 | 32.9 | 14.9 | 2.21 |
| Compound I+Chlorothalonil | 0.098 | 75 | 98.0 | 88.9 | 1.10 |

Table 20. Synergistic interactions between compound I and chlorothalonil in 3-day curative (3DC) PHAKPA test

| Treatment | Compoun d I rate ppm | Chlorothal onil rate ppm | %DC obs | %DC exp | Synerg y factor |
|---|---|---|---|---|---|
| Compound I | 0.098 | | 9.2 | | |
| Compound I | 0.39 | | 48.2 | | |

(continued)

| Treatment | Compoun d I rate ppm | Chlorothal onil rate ppm | %DC obs | %DC exp | Synerg y factor |
|---|---|---|---|---|---|
| Chlorothalonil | | 37.5 | 4.6 | | |
| Chlorothalonil | | 75 | 13.7 | | |
| Chlorothalonil | | 150 | 18.3 | | |
| Compound I+Chlorothalonil | 0.098 | 37.5 | 22.8 | 13.4 | 1.70 |
| Compound | 0.39 | 75 | 63.7 | 55.3 | 1.15 |
| I+Chlorothalonil | | | | | |
| Compound I+Chlorothalonil | 0.39 | 150 | 66.4 | 57.7 | 1.15 |

**Example 12. Synergistic interactions between XR-747 and difenoconazole were detected in protectant and curative treatments vs. PHAKPA (Tables 21-22).**

Table 21. Synergistic interactions between compound I and difenoconazole in 1-day protectant (1DP) PHAKPA) test

| Treatment | Compoun d I rate ppm | Difenocon azole rate ppm | %DC obs | %DC exp | Synerg y factor |
|---|---|---|---|---|---|
| Compound I | 0.098 | | 14.9 | | |
| Difenoconazole | | 0.19 | 41.9 | | |
| Compound I+Difenoconazole | 0.098 | 0.19 | 55.0 | 50.6 | 1.09 |

Table 22. Synergistic interactions between compound I and difenoconazole in 3-day curative (3DC) PHAKPA test

| Treatment | Compoun d I rate ppm | Difenocon azole rate ppm | %DC obs | %DC exp | Synerg y factor |
|---|---|---|---|---|---|
| Compound I | 0.098 | | 9.2 | | |
| Compound I | 0.39 | | 48.2 | | |
| Difenoconazole | | 0.19 | 18.3 | | |
| Compound I+Difenoconazole | 0.098 | 0.19 | 31.9 | 25.8 | 1.24 |
| Compound I+Difenoconazole | 0.39 | 0.19 | 82.7 | 57.7 | 1.43 |

**Example 13. Synergistic interactions between XR-747 and mefentrifluconazole were detected in protectant and curative treatments vs. PHAKPA (Tables 23-24).**

Table 23. Synergistic interactions between compound I and mefentrifluconazole in 1-day protectant (1DP) PHAKPA) test

| Treatment | Compou nd I rate ppm | Mefentrifluco nazole rate ppm | %DC obs | %DC exp | Synerg y factor |
|---|---|---|---|---|---|
| Compound I | 0.098 | | 14.9 | | |
| Menfentrifluconazole | | 0.049 | 9.9 | | |
| Menfentrifluconazole | | 0.195 | 87.0 | | |
| Compound I+Mefentrifluconazole | 0.098 | 0.049 | 100.0 | 23.3 | 4.28 |

(continued)

| Treatment | Compou nd I rate ppm | Mefentrifluco nazole rate ppm | %DC obs | %DC exp | Synerg y factor |
|---|---|---|---|---|---|
| Compound I+Mefentrifluconazole | 0.098 | 0.195 | 98.0 | 88.9 | 1.10 |

Table 24. Synergistic interactions between compound I and mefentrifluconazole in 3-day curative (3DC) PHAKPA test

| Treatment | Compou nd I rate ppm | Mefentrifluco nazole rate ppm | %DC obs | %DC exp | Synerg y factor |
|---|---|---|---|---|---|
| Compound I | 0.098 | | 9.2 | | |
| Mefentrifluconazole | | 0.049 | 43.7 | | |
| Mefentrifluconazole | | 0.195 | 69.1 | | |
| Compound I+Mefentrifluconazole | 0.098 | 0.049 | 98.2 | 48.9 | 2.01 |
| Compound I+Mefentrifluconazole | 0.098 | 0.195 | 93.6 | 72.0 | 1.30 |

**Example 14. Synergistic interactions between XR-747 and Cu oxychloride were detected in curative treatment vs. PHAKPA (Table 25).**

Table 25. Synergistic interactions between compound I and Cu oxychloride in 3-day curative (3DC) PHAKPA) test

| Treatment | Compoun d I rate ppm | Cu oxychlorid e rate ppm | %DC obs | %DC exp | Synerg y factor |
|---|---|---|---|---|---|
| Compound I | 0.39 | | 48.2 | | |
| Cu Oxychloride | | 200 | 13.7 | | |
| Compound I+Cu oxychloride | 0.39 | 200 | 63.7 | 55.3 | 1.15 |

**Example 15. Synergistic interactions between XR-747 and fenpropimorph were detected in curative treatment vs. PHAKPA (Table 26).**

Table 26. Synergistic interactions between compound I and fenpropimorph in 3-day curative (3DC) PHAKPA test

| Treatment | Compoun d I rate ppm | Fenpropi morph rate ppm | %DC obs | %DC exp | Synerg y factor |
|---|---|---|---|---|---|
| Compound I | 0.098 | | 9.2 | | |
| Compound I | 0.39 | | 48.2 | | |
| Fenpropimorph | | 100 | 36.4 | | |
| Fenpropimorph | | 200 | 61.9 | | |
| Compound I+Fenpropimorph | 0.098 | 100 | 50.0 | 42.3 | 1.18 |
| Compound I+Fenpropimorph | 0.39 | 200 | 89.1 | 80.3 | 1.11 |

**Example 16. Synergistic interactions between XR-747 and propiconazole were detected in protectant and curative treatments vs. PHAKPA (Tables 27-28).**

Table 27. Synergistic interactions between compound I and propiconazole in 1-day protectant (1DP) PHAKPA test

| Treatment | Compoun d I rate ppm | Propicona zole rate ppm | %DC obs | %DC exp | Synergy factor |
|---|---|---|---|---|---|
| Compound I | 0.098 | | 14.9 | | |
| Propiconazole | | 0.195 | 19.9 | | |
| Propiconazole | | 0.78 | 78.0 | | |
| Compound I+Propiconazole | 0.098 | 0.195 | 47.9 | 31.9 | 1.50 |
| Compound I+Propiconazole | 0.098 | 0.78 | 86.0 | 81.3 | 1.06 |

Table 28. Synergistic interactions between compound I and propiconazole in 3-day curative (3DC) PHAKPA test

| Treatment | Compoun d I rate ppm | Propicona zole rate ppm | %DC obs | %DC exp | Synerg y factor |
|---|---|---|---|---|---|
| Compound I | 0.39 | | 48.2 | | |
| Propiconazole | | 0.049 | 9.2 | | |
| Propiconazole | | 0.195 | 59.1 | | |
| Compound I+Propiconazole | 0.39 | 0.049 | 81.8 | 53.0 | 1.54 |
| Compound I+Propiconazole | 0.39 | 0.195 | 86.4 | 78.8 | 1.10 |

**Example17. Synergistic interactions between XR-747 and tetraconazole were detected in protectant and curative treatments vs. PHAKPA (Tables 29-30).**

Table 29. Synergistic interactions between compound I and tetraconazole in 1-day protectant (1DP) PHAKPA test

| Treatment | Compoun d I rate ppm | Tetracona zole rate ppm | %DC obs | %DC exp | Synerg y factor |
|---|---|---|---|---|---|
| Compound I | 0.098 | | 14.9 | | |
| Compound I | 0.39 | | 91.0 | | |
| Tetraconazole | | 0.012 | 0.0 | | |
| Tetraconazole | | 0.049 | 0.0 | | |
| Tetraconazole | | 0.195 | 90.0 | | |
| Compound I+Tetraconazole | 0.098 | 0.012 | 34.9 | 14.9 | 2.34 |
| Compound I+Tetraconazole | 0.098 | 0.049 | 66.0 | 14.9 | 4.42 |
| Compound I+Tetraconazole | 0.098 | 0.195 | 97.0 | 91.5 | 1.06 |
| Compound I+Tetraconazole | 0.39 | 0.049 | 97.0 | 91.0 | 1.07 |

Table 30. Synergistic interactions between compound I and tetraconazole in 3-day curative (3DC) PHAKPA test

| Treatment | Compoun d I rate ppm | Tetracona zole rate ppm | %DC obs | %DC exp | Synerg y factor |
|---|---|---|---|---|---|
| Compound I | 0.098 | | 9.2 | | |
| Compound I | 0.39 | | 48.2 | | |
| Tetraconazole | | 0.012 | 13.7 | | |
| Tetraconazole | | 0.049 | 13.7 | | |
| Compound I+Tetraconazole | 0.098 | 0.012 | 22.8 | 21.6 | 1.05 |

(continued)

| Treatment | Compoun d I rate ppm | Tetracona zole rate ppm | %DC obs | %DC exp | Synerg y factor |
|---|---|---|---|---|---|
| Compound I+Tetraconazole | 0.098 | 0.049 | 38.2 | 21.6 | 1.77 |
| Compound I+Tetraconazole | 0.39 | 0.012 | 73.7 | 55.3 | 1.33 |
| Compound I+Tetraconazole | 0.39 | 0.049 | 82.7 | 55.3 | 1.50 |

**Example 18. Synergistic interactions between XR-747 and trifloxystrobin were detected in protectant and curative treatments vs. PHAKPA (Tables 31-32).**

Table 31. Synergistic interactions between compound I and trifloxystrobin in 1-day protectant (1DP) PHAKPA) test

| Treatment | Compoun d I rate ppm | Trifloxystr obin rate ppm | %DC obs | %DC exp | Synerg y factor |
|---|---|---|---|---|---|
| Compound I | 0.098 | | 14.9 | | |
| Trifloxystrobin | | | 0.0 | | |
| Trifloxystrobin | | | 81.0 | | |
| Compound I+Trifloxystrobin | 0.098 | 0.195 | 90.0 | 14.9 | 6.03 |
| Compound I+Trifloxystrobin | 0.098 | 0.78 | 96.0 | 83.8 | 1.15 |

Table 32. Synergistic interactions between compound I and trifloxystrobin in 3-day curative (3DC) PHAKPA test

| Treatment | Compoun d I rate ppm | Trifloxystr obin rate ppm | %DC obs | %DC exp | Synerg y factor |
|---|---|---|---|---|---|
| Compound I | 0.098 | | 9.2 | | |
| Compound I | 0.39 | | 48.2 | | |
| Trifloxystrobin | | 0.195 | 18.3 | | |
| Compound I+Trifloxystrobin | 0.098 | 0.195 | 69.1 | 25.8 | 2.68 |
| Compound I+Trifloxystrobin | 0.39 | 0.195 | 80.9 | 57.7 | 1.40 |

**Example 19. Synergistic interactions between XR-747 and mancozeb were detected in protectant and curative treatments vs. PHAKPA (Tables 33-34).**

Table 33. Synergistic interactions between compound I and mancozeb in 1-day protectant (1DP) PHAKPA test

| Treatment | Compoun d I rate ppm | Mancozeb rate ppm | %DC obs | %DC exp | Synerg y factor |
|---|---|---|---|---|---|
| Compound I | 0.098 | | 3.8 | | |
| Compound I | 0.39 | | 79.2 | | |
| Mancozeb | | 0.78 | 0.0 | | |
| Mancozeb | | 3.125 | 0.0 | | |
| Compound I + Mancozeb | 0.098 | 0.78 | 7.6 | 3.8 | 2.02 |
| Compound I + Mancozeb | 0.098 | 3.125 | 19.2 | 3.8 | 5.08 |
| Compound I + Mancozeb | 0.39 | 3.125 | 91.5 | 79.2 | 1.16 |

Table 34. Synergistic interactions between compound I and mancozeb in 3-day curative (3DC) PHAKPA test

| Treatment | Compoun d I rate ppm | Mancozeb rate ppm | %DC obs | %DC exp | Synerg y factor |
|---|---|---|---|---|---|
| Compound I | 0.098 | | 14.8 | | |
| Compound I | 0.39 | | 25.9 | | |
| Mancozeb | | | 0 | | |
| Compound I + Mancozeb | 0.098 | 3.125 | 29.6 | 14.8 | 2.00 |
| Compound I + Mancozeb | 0.39 | 3.125 | 37.0 | 25.9 | 1.43 |

**Example 20. Synergistic interactions between XR-747 and pydiflumetofen were detected in protectant treatment vs. PHAKPA (Tables 35).**

Table 35. Synergistic interactions between compound I and pydiflumetofen in 1-day protectant (1DP) PHAKPA) test

| Treatment | Compoun d I rate ppm | Pydiflume tofen rate ppm | %DC obs | %DC exp | Synerg y factor |
|---|---|---|---|---|---|
| Compound I | 0.098 | | 3.8 | | |
| Compound I | 0.39 | | 79.2 | | |
| Pydiflumetofen | | 12.5 | 0.0 | | |
| Pydiflumetofen | | 50 | 15.3 | | |
| Pydiflumetofen | | 200 | 85.4 | | |
| Compound I + Pydiflumetofen | 0.098 | 12.5 | 11.5 | 3.8 | 3.04 |
| Compound I + Pydiflumetofen | 0.098 | 50 | 69.2 | 18.5 | 3.74 |
| Compound I + Pydiflumetofen | 0.098 | 200 | 90.0 | 85.9 | 1.05 |
| Compound I + Pydiflumetofen | 0.39 | 50 | 90.0 | 82.4 | 1.09 |

**Example 21. Synergistic interactions between XR-747 and metominostrobin were detected in protectant and curative treatments vs. PHAKPA (Tables 36-37).**

Table 36. Synergistic interactions between compound I and metominostrobin in 1-day protectant (1DP) PHAKPA test

| Treatment | Compoun d I rate ppm | Metominostr obin rate ppm | %DC obs | %DC exp | Synerg y factor |
|---|---|---|---|---|---|
| Compound I | 0.098 | | 3.7 | | |
| Compound I | 0.39 | | 91.1 | | |
| Metominostrobin | | 0.78 | 0.0 | | |
| Metominostrobin | | 3.125 | 11.1 | | |
| Metominostrobin | | 12.5 | 64.4 | | |
| Compound I + Metominostrobin | 0.098 | 0.78 | 51.9 | 3.7 | 14.00 |
| Compound I + Metominostrobin | 0.098 | 3.125 | 85.2 | 14.4 | 5.91 |
| Compound I + Metominostrobin | 0.098 | 12.5 | 94.8 | 65.8 | 1.44 |
| Compound I + Metominostrobin | 0.39 | 0.78 | 99.3 | 91.1 | 1.09 |
| Compound I + Metominostrobin | 0.39 | 3.125 | 100.0 | 92.1 | 1.09 |

Table 37. Synergistic interactions between compound I and metominostrobin in 3-day curative (3DC) PHAKPA test

| Treatment | Compoun d I rate ppm | Metominostr obin rate ppm | %DC obs | %DC exp | Synerg y factor |
|---|---|---|---|---|---|
| Compound I | 0.098 | | 14.3 | | |
| Compound I | 0.39 | | 23.8 | | |
| Compound I | 1.56 | | 81.9 | | |
| Metominostrobin | | 0.78 | 33.3 | | |
| Metominostrobin | | 3.125 | 67.6 | | |
| Compound I + Metominostrobin | 0.098 | 3.125 | 77.1 | 72.2 | 1.07 |
| Compound I + Metominostrobin | 0.39 | 0.78 | 61.9 | 49.2 | 1.26 |
| Compound I + Metominostrobin | 0.39 | 3.125 | 97.1 | 75.3 | 1.29 |
| Compound I + Metominostrobin | 1.56 | 0.78 | 93.3 | 87.9 | 1.06 |

**Example 22. Synergistic interactions in ternary mixture of XR-747, picoxystrobin and mancozeb were detected in protectant and curative treatments vs. PHAKPA (Tables 38-39).**

Table 38. Synergistic interactions in ternary mixtures of compound I, picoxystrobin and mancozeb in 1-day protectant (1DP) PHAKPA test

| Treatment | Compound I rate ppm | Picoxystro bin rate ppm | Mancoz eb rate ppm | %D C obs | %DC exp | Syne rgy facto r |
|---|---|---|---|---|---|---|
| Compound I | 0.098 | | | 3.8 | | |
| Compound I | 0.39 | | | 79.2 | | |
| Picoxystrobin | | 0.049 | | 0.8 | | |
| Picoxystrobin | | 0.195 | | 0 | | |
| Picoxystrobin | | 0.78 | | 80 | | |
| Mancozeb | | | 0.19 | 3.8 | | |
| Mancozeb | | | 0.78 | 0 | | |
| Mancozeb | | | 3.125 | 0 | | |
| Compound I + Picoxystrobin + Mancozeb | 0.098 | 0.049 | 0.19 | 30.7 | 10.9 | 2.82 |
| Compound I + Picoxystrobin + Mancozeb | 0.098 | 0.049 | 0.78 | 38.4 | 7.4 | 5.19 |
| Compound I + Picoxystrobin + Mancozeb | 0.098 | 0.049 | 3.125 | 69.2 | 7.4 | 9.35 |
| Compound I + Picoxystrobin + Mancozeb | 0.098 | 0.195 | 0.19 | 53.8 | 7.4 | 7.27 |
| Compound I + Picoxystrobin + Mancozeb | 0.098 | 0.195 | 0.78 | 87.7 | 3.8 | 23.2 4 |
| Compound I + Picoxystrobin + Mancozeb | 0.098 | 0.195 | 3.125 | 87.7 | 3.8 | 23.2 4 |
| Compound I + Picoxystrobin + Mancozeb | 0.098 | 0.78 | 0.19 | 93.8 | 81.5 | 1.15 |
| Compound I + Picoxystrobin + Mancozeb | 0.098 | 0.78 | 0.78 | 94.6 | 80.7 | 1.17 |
| Compound I + Picoxystrobin + Mancozeb | 0.098 | 0.78 | 3.125 | 95.4 | 80.7 | 1.18 |
| Compound I + Picoxystrobin + Mancozeb | 0.39 | 0.049 | 0.78 | 86.9 | 80.0 | 1.09 |
| Compound I + Picoxystrobin + Mancozeb | 0.39 | 0.049 | 3.125 | 90.0 | 80.0 | 1.12 |
| Compound I + Picoxystrobin + Mancozeb | 0.39 | 0.195 | 0.19 | 86.1 | 80.0 | 1.08 |
| Compound I + Picoxystrobin + Mancozeb | 0.39 | 0.195 | 0.78 | 94.6 | 79.2 | 1.19 |

(continued)

| Treatment | Compound I rate ppm | Picoxystro bin rate ppm | Mancoz eb rate ppm | %D C obs | %DC exp | Syne rgy facto r |
|---|---|---|---|---|---|---|
| Compound I + Picoxystrobin + Mancozeb | 0.39 | 0.195 | 3.125 | 94.6 | 79.2 | 1.19 |

Table 39. Synergistic interactions in the ternary mixtures of compound I, picoxystrobin and mancozeb in 3-day curative (3DC) PHAKPA test

| Treatment | Compound I rate ppm | Picoxystro bin rate ppm | Mancoz eb rate ppm | %D C obs | %DC exp | Syner gy factor |
|---|---|---|---|---|---|---|
| Compound I | 0.098 | | | 14.8 | | |
| Compound I | 0.39 | | | 25.9 | | |
| Compound I | 1.56 | | | 87.4 | | |
| Picoxystrobin | | 0.049 | | 18.5 | | |
| Picoxystrobin | | 0.195 | | 14.8 | | |
| Picoxystrobin | | 0.78 | | 53.3 | | |
| Mancozeb | | | 0.19 | 14.8 | | |
| Mancozeb | | | 0.78 | 14.8 | | |
| Mancozeb | | | 3.125 | 0 | | |
| Compound I + Picoxystrobin + Mancozeb | 0.098 | 0.049 | 3.125 | 33.3 | 30.6 | 1.09 |
| Compound I + Picoxystrobin + Mancozeb | 0.098 | 0.195 | 0.78 | 65.2 | 38.2 | 1.71 |
| Compound I + Picoxystrobin + Mancozeb | 0.098 | 0.195 | 3.125 | 55.6 | 27.4 | 2.03 |
| Compound I + Picoxystrobin + Mancozeb | 0.098 | 0.78 | 0.19 | 78.5 | 66.1 | 1.19 |
| Compound I + Picoxystrobin + Mancozeb | 0.098 | 0.78 | 0.78 | 90.4 | 66.1 | 1.37 |
| Compound I + Picoxystrobin + Mancozeb | 0.098 | 0.78 | 3.125 | 93.3 | 60.2 | 1.55 |
| Compound I + Picoxystrobin + Mancozeb | 0.39 | 0.049 | 0.78 | 70.4 | 48.6 | 1.45 |
| Compound I + Picoxystrobin + Mancozeb | 0.39 | 0.049 | 3.125 | 58.5 | 39.6 | 1.48 |
| Compound I + Picoxystrobin + Mancozeb | 0.39 | 0.195 | 0.19 | 60.7 | 46.2 | 1.31 |
| Compound I + Picoxystrobin + Mancozeb | 0.39 | 0.195 | 0.78 | 74.8 | 46.2 | 1.62 |
| Compound I + Picoxystrobin + Mancozeb | 0.39 | 0.195 | 3.125 | 74.8 | 36.9 | 2.03 |
| Compound I + Picoxystrobin + Mancozeb | 0.39 | 0.78 | 0.19 | 93.3 | 70.6 | 1.32 |
| Compound I + Picoxystrobin + Mancozeb | 0.39 | 0.78 | 0.78 | 94.8 | 70.6 | 1.34 |
| Compound I + Picoxystrobin + Mancozeb | 0.39 | 0.78 | 3.125 | 93.3 | 65.4 | 1.43 |
| Compound I + Picoxystrobin + Mancozeb | 1.56 | 0.195 | 3.125 | 93.3 | 89.3 | 1.05 |

When disease fully developed on the control plants, infection levels were assessed on treated plants visually and scored on a scale of 0 to 100 percent. Percentage of disease control was then calculated using the ratio of disease on treated plants relative to control plants.

Colby's equation was used to determine the fungicidal effects expected from the mixtures. (See Colby, S. R. Calculation of the synergistic and antagonistic response of herbicide combinations. Weeds 1967, 15, 20-22.)

The following equation was used to calculate the expected activity of mixtures containing two active ingredients, A and B:

$$\text{Expected} = A + B - (A \times B/100)$$

A = observed efficacy of active component A at the same concentration as used in the mixture;
B = observed efficacy of active component B at the same concentration as used in the mixture.

Representative synergistic interactions are presented in the following Tables 1-12.

%DC Obs= Percent disease control observed

%DC Exp= Percent disease control expected

Synergism factor = %DC Obs/%DC Exp

For all tables,

%DC = % Disease Control

The following numbered clauses summarize some aspects of the present disclosure:

1. A syngeristic fungicide mixture comprising:
a compound of Formula I:

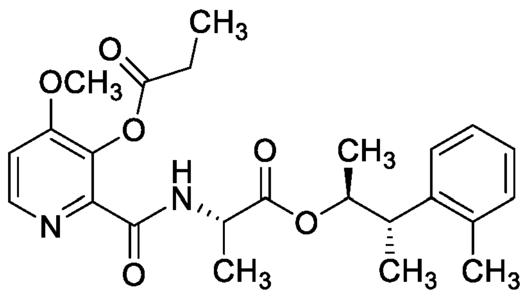

**I**

;

and one or two additional fungicides selected from the group consisting of: a MET III Qi inhibitor, a succinate dehydrogenase inhibitors (SDHI), a MET III Qo inhibitor, a multi-site inhibitor (MSI), a sterol biosynthesis inhibitors (SBI) and any combinations thereof.

2. The mixture of Clause 1 comprising one additional fungicide.

3. The mixture of Clause 1 comprising two additional fungicides.

4. The mixture of any one of Clauses 1-3 wherein each additional fungicide is selected from the group consisting of: benzovindiflupyr, fluxapyroxad, bixafen, pydiflumetofen, picoxystrobin, azoxystrobin, pyraclostrobin, trifloxystrobin, metominostrobin, prothioconazole, epoxiconazole, tebuconazole, cyproconazole, difenoconazole, mefentrifluconazole, propiconazole, tetraconazole, fenpropimorph, chlorothalonil, mancozeb, Cu oxychloride and any combinations thereof.

5. The mixture according to Clause 4 wherein the weight ratio of Compound I to each additional fungicide is between about 1:1 and about 1:100.

6. The mixture according to Clause 4 wherein the weight ratio of Compound I to each additional fungicide is between about 1:1 and about 10:1.

7. The mixture according to Clause 5 or 6 wherein the mixture comprises one additional fungicide which is a SDHI.

8. The mixture according to Clause 5 or 6 wherein the mixture comprises one additional fungicide which is a SBI.

9. The mixture according to Clause 5 or 6 wherein the mixture comprises one additional fungicide which is a MET III Qi inhibitor.

10. The mixture according to Clause 5 or 6 wherein the mixture comprises one additional fungicide which is a MET III Qo inhibitor.

11. The mixture of any one of Clauses 1, 2 and 3-6 wherein the mixture comprises one additional fungicide which is picoxystrobin.

12. The mixture of any one of Clauses 1, 2 and 3-6 wherein the mixture comprises one additional fungicide which is benzovindiflupyr.

13. The mixture of any one of Clauses 1 and 3-6 wherein the mixture comprises two additional fungicides which are benzovindiflupyr and picoxystrobin.

14. The mixture according to any one of Clauses 1-12 wherein the mixture comprises one additional fungicide and Compound I; and wherein the additional fungicide and Compound I have a different mode of activity.

15. The mixture according to any one of Clauses 1-6 or 13 wherein the mixture comprises two additional fungicides and Compound I; and wherein one additional fungicide and Compound I have a different mode of activity.

16. The mixture according to any one of Clauses 1-6 or 13 wherein the mixture comprises two additional fungicides; and wherein the two additional fungicides each have a different mode of activity.

17. A fungicidal composition comprising a fungicidally effective amount of the mixture of any one of Clauses 1-16 and an agriculturally acceptable adjuvant or carrier.

18. Use of the mixture or the composition of any of Clauses 1-17 for controlling Asian soybean rust in an area near or around or on a plant.

19. The use according to Clause 18 in which the Asian soybean rust is caused by (*Phakopsora pachyrhizi,* PHAKPA).

20. The use according to any one of Clauses 18-19 wherein the composition or mixture is applied at an application rate of between 20 grams per hectare (g/H) to 3000 g/H, based on the total amount of active ingredients in the composition.

## Claims

**1.** A synergistic fungicide mixture comprising: a compound of Formula I:

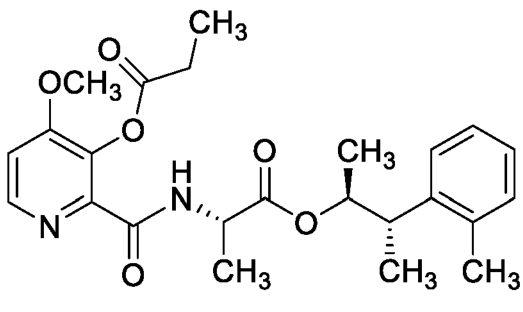

**I** ;

and one or two additional fungicides selected from the group consisting of: a MET III Qi inhibitor, a succinate dehydrogenase inhibitors (SDHI), a MET III Qo inhibitor, a multi-site inhibitor (MSI), a sterol biosynthesis inhibitors (SBI) and any combinations thereof.

2. The mixture of Claim 1 comprising one additional fungicide.

3. The mixture of Claim 1 comprising two additional fungicides.

4. The mixture of any one of Claims 1-3 wherein each additional fungicide is selected from the group consisting of: benzovindiflupyr, fluxapyroxad, bixafen, pydiflumetofen, picoxystrobin, azoxystrobin, pyraclostrobin, trifloxystrobin, metominostrobin, prothioconazole, epoxiconazole, tebuconazole, cyproconazole, difenoconazole, mefentrifluconazole, propiconazole, tetraconazole, fenpropimorph, chlorothalonil, mancozeb, Cu oxychloride and any combinations thereof.

5. The mixture according to Claim 4 wherein the weight ratio of Compound I to each additional fungicide is between about 1:1 and about 1:100 or between about 1:1 and about 10:1.

6. The mixture according to Claim 5 wherein the mixture comprises one additional fungicide which is a SDHI, a SBI, a MET III Qi inhibitor, or a MET III Qo inhibitor.

7. The mixture of any one of Claims 1, 2 and 3-5 wherein the mixture comprises one additional fungicide which is picoxystrobin or benzovindiflupyr.

8. The mixture of any one of Claims 1 and 3-5 wherein the mixture comprises two additional fungicides which are benzovindiflupyr and picoxystrobin.

9. The mixture according to any one of Claims 1-7 wherein the mixture comprises one additional fungicide and Compound I; and wherein the additional fungicide and Compound I have a different mode of activity.

10. The mixture according to any one of Claims 1-5 or 8 wherein the mixture comprises two additional fungicides and Compound I; and wherein one additional fungicide and Compound I have a different mode of activity.

11. The mixture according to any one of Claims 1-5 or 8 wherein the mixture comprises two additional fungicides; and wherein the two additional fungicides each have a different mode of activity.

12. A fungicidal composition comprising a fungicidally effective amount of the mixture of any one of claims 1-11 and an agriculturally acceptable adjuvant or carrier.

13. Use of the mixture or the composition of any of Claims 1-12 for controlling Asian soybean rust in an area near or around or on a plant.

14. The use according to Claim 13 in which the Asian soybean rust is caused by (*Phakopsora pachyrhizi,* PHAKPA).

15. The use according to any one of Claims 13-14 wherein the composition or mixture is applied at an application rate of between 20 grams per hectare (g/H) to 3000 g/H, based on the total amount of active ingredients in the composition.

Europäisches Patentamt
European Patent Office
Office européen des brevets

# EUROPEAN SEARCH REPORT

Application Number
EP 25 15 7147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/204436 A1 (DOW AGROSCIENCES LLC [US]) 8 November 2018 (2018-11-08)<br>* the whole document *<br>----- | 1-3,9-15 | INV.<br>A01N43/40<br>A01N47/14<br>A01P3/00<br>A01N45/02<br>A01N43/56<br>A01N43/54<br>A01N47/24<br>A01N37/50<br>A01N43/653<br>A01N43/84<br>A01N37/34<br>A01N59/16<br>A01N59/20 |
| X,D | WO 2019/173665 A1 (DOW AGROSCIENCES LLC [US]) 12 September 2019 (2019-09-12)<br>* paragraph [0054]; example C; compound 278 *<br>----- | 1-3,9-15 | |
| | | | TECHNICAL FIELDS SEARCHED (IPC) |
| | | | A01N<br>A01P |

The present search report has been drawn up for all claims

1

| Place of search | Date of completion of the search | Examiner |
|---|---|---|
| Munich | 12 May 2025 | Bertrand, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 15 7147

This annex lists the patent family members relating to the patent documents cited in the above-mentioned European search report. The members are as contained in the European Patent Office EDP file on The European Patent Office is in no way liable for these particulars which are merely given for the purpose of information.

12-05-2025

| Patent document cited in search report | Publication date | Patent family member(s) | Publication date |
|---|---|---|---|
| WO 2018204436 A1 | 08-11-2018 | AR 111565 A1 | 24-07-2019 |
| | | AU 2018261342 A1 | 21-11-2019 |
| | | BR 112019023053 A2 | 09-06-2020 |
| | | CA 3062285 A1 | 08-11-2018 |
| | | CL 2019003116 A1 | 21-02-2020 |
| | | CN 110913696 A | 24-03-2020 |
| | | CO 2019013340 A2 | 17-01-2020 |
| | | EP 3618624 A1 | 11-03-2020 |
| | | EP 4527202 A2 | 26-03-2025 |
| | | JP 7249956 B2 | 31-03-2023 |
| | | JP 2020518609 A | 25-06-2020 |
| | | JP 2023078323 A | 06-06-2023 |
| | | RU 2019138691 A | 03-06-2021 |
| | | TW 201842851 A | 16-12-2018 |
| | | UA 126290 C2 | 14-09-2022 |
| | | US 2020085048 A1 | 19-03-2020 |
| | | US 2022071212 A1 | 10-03-2022 |
| | | UY 37713 A | 30-11-2018 |
| | | WO 2018204436 A1 | 08-11-2018 |
| | | ZA 201907342 B | 28-04-2021 |
| WO 2019173665 A1 | 12-09-2019 | AU 2019231764 A1 | 01-10-2020 |
| | | BR 102019004480 A2 | 01-10-2019 |
| | | CA 3093446 A1 | 12-09-2019 |
| | | CL 2020002311 A1 | 15-01-2021 |
| | | CN 112040773 A | 04-12-2020 |
| | | CN 115745877 A | 07-03-2023 |
| | | CO 2020012505 A2 | 30-10-2020 |
| | | CR 20200393 A | 23-11-2020 |
| | | EP 3761790 A1 | 13-01-2021 |
| | | JP 7336452 B2 | 31-08-2023 |
| | | JP 2021515020 A | 17-06-2021 |
| | | JP 2023159285 A | 31-10-2023 |
| | | KR 20200129141 A | 17-11-2020 |
| | | US 2019276404 A1 | 12-09-2019 |
| | | US 2020399222 A1 | 24-12-2020 |
| | | US 2023049481 A1 | 16-02-2023 |
| | | US 2025074879 A1 | 06-03-2025 |
| | | UY 38140 A | 31-10-2019 |
| | | WO 2019173665 A1 | 12-09-2019 |
| | | ZA 202005639 B | 22-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2019021263 W
- US 3060084 A
- US 3299566 A
- US 4172714 A
- US 4144050 A
- US 3920442 A
- US 5180587 A
- US 5232701 A
- US 5208030 A
- EP 707445 A
- GB 2095558 A
- WO 9113546 A
- US 495228


### Non-patent literature cited in the description


- The Pesticide Manual. 2018
- **HANCE et al.** Weed Control Handbook. Blackwell Scientific, 1989
- **MOLLET, H.** ; **GRUBEMANN, A.** Formulation technology. Wiley VCH Verlag, 2001
- Perry's Chemical Engineer's Handbook. McGraw-Hill, 1963
- **BROWNING et al.** Agglomeration. *Chemical Engineering*, 04 December 1967, 147-48
- **KLINGMAN**. Weed Control as a Science. J. Wiley & Sons, 1961
- Brix as an Indicator of Vegetable Quality: Instructions for Measuring. **MATTHEW D. KLEINHENZ** ; **NATALIE R. BUMGARNER**. Brix in Cucumber, Leafy Greens, Sweet Corn, Tomato, and Watermelon, HYG-1653. Department of Horticulture and Crop Science, The Ohio State University, 2015
- **T.E. CREIGHTON**. Proteins: Structures and Molecular Properties. W.H. Freeman and Company, 1993
- **A.L. LEHNINGER**. Biochemistry. Worth Publishers, Inc.
- **SAMBROOK et al.** Molecular Cloning: A Laboratory Manual. 1989
- Methods In Enzymology. Academic Press, Inc.
- Remington's Pharmaceutical Sciences. Mack Publishing Company, 1990
- **CAREY**. Sundberg Advanced Organic Chemistry. Plenum Press, 1992, vol. A,B
- Organic Reactions. John Wiley, and Sons, 1991, vol. 1-40
- **COLBY, S. R.** Calculation of the synergistic and antagonistic response of herbicide combinations. *Weeds*, 1967, vol. 15, 20-22